# EUROPÄISCHE PATENTSCHRIFT

(11) **EP 2 439 048 B1**
(45) Veröffentlichungstag und Bekanntmachung des Hinweises auf die Patenterteilung: **16.11.2016**
(21) Anmeldenummer: 11181083.4
(22) Anmeldetag: 13.09.2011
(51) Int. Cl.: B29C 49/78, B65C 9/40, B67B 3/26, B67C 3/00

(54) **Verfahren zum Behandeln wenigstens eines Behälters in einer Behälterbehandlungsanlage**
Method for treating at least one container in a container treatment assembly
Procédé de traitement d'au moins un récipient dans une installation de traitement de récipients

(30) Priorität: 07.10.2010 DE 102010042165
(43) Veröffentlichungstag der Anmeldung: 11.04.2012
(73) Patentinhaber: Krones AG, 93073 Neutraubling (DE)
(72) Erfinder: Hahn, Wolfgang, 93073 Neutraubling (DE); Forsthövel, Jochen, 93059 Regensburg (DE); Senn, Konrad, 93059 Regensburg (DE); Zölfl, Markus, 94526 Metten (DE); Winzinger, Frank, 85354 Freising (DE); Sobiech, Bernd, 93049 Regensburg (DE); Hausladen, Josef, 93086 Wörth/Donau (DE); Raith, Stefan, 93102 Pfatter (DE); Donhauser, Alexandra, 93049 Regensburg (DE); Berger, Clemens, 93138 Lappersdorf (DE)
(74) Vertreter: Grünecker Patent- und Rechtsanwälte PartG mbB

(56) Entgegenhaltungen:
- EP-A1- 1 627 816
- EP-A1- 2 279 952
- EP-A1- 2 295 226
- EP-A1- 2 407 417
- WO-A2-2008/112414
- DE-U1- 29 713 701

## Beschreibung

Die Erfindung betrifft ein Verfahren zum Behandeln wenigstens eines Behälters in einer Behäl-terbehandlungsanlage, sowie eine Behälterbehandlungsanlage.

Aus der WO 2008/1124214 ist eine Abfüllanlage für Behälter bekannt. Die Behälter können eine Kennzeichnung aufweisen, wobei die Abfüllung der Behälter ein Erfassen der Kennzeichnung umfassen kann.

Die EP1627816 betrifft ein Etikettierverfahren, bei dem die Behälter von einer Sensoreinheit erfasst werden. Diese stellt die Kontur des jeweiligen Behälters und/oder die Lage bereits auf dem Behälter aufgebrachter Etiketten zur Bildung eines Istwertes fest. Unter Berücksichtigung der Abweichung des Istwertes von einem Sollwert wird der Etikettiervorgang dann gesteuert.

Die EP 2 407 417 wurde am 18.01.2012 offenbart und gehört zum Stand der Technik nach Artikel 54(3) EPÜ. In der EP 2 407 417 wird eine Behandlungsanlage mit einer Etikettiermaschine mit mehreren Aggregaten offenbart, wobei die Behälter ein Identifizierungsmerkmal, beispielsweise in Form eines Barcodes aufweisen können.

Insbesondere in der Getränkeindustrie werden häufig Produktgebinde mit verschiedenen Produkten, beispielsweise unterschiedlichen Getränken, angeboten. Beispielsweise können sich in einem Gebinde zwei Flaschen Orangensaft, zwei Flaschen Johannisbeersaft und zwei Flaschen Wasser befinden.

Dabei werden die unterschiedlichen Produkte meist in unterschiedlichen Behältern angeboten, beispielsweise in Kunststoff- und/oder Glasflaschen mit unterschiedlicher Farbe und/oder unterschiedlicher Etikettierung. Um dies zu erreichen muss eine Behälterbehandlungsanlage, beispielsweise eine Abfüllanlage, vor dem Produktionsbeginn auf das abzufüllende Produkt und die Behälter für das abzufüllende Produkt eingestellt werden. Die einzelnen Produkte werden dann in separaten Produktionsdurchläufen abgefüllt und schließlich zu einem Produktmischgebinde kommissioniert.

Ein Nachteil dieses Verfahrens ist es, dass nicht flexibel auf neue Anforderungen, beispielsweise auf neue oder zusätzliche Produktionsaufträge, eingegangen werden kann, und dass es zwischen der Abfüllung von zwei unterschiedlichen Produkten häufig zu Produktionsunterbrechung für manuelle Umrüstarbeiten an der Abfüllanlage kommt.

Daher ist es Aufgabe der vorliegenden Erfindung, ein flexibleres Etikettierverfahren bereitzustellen. Diese Aufgabe wird durch ein Verfahren gemäß Patentanspruch 1 gelöst.

Dadurch, dass im erfindungsgemäßen Verfahren der wenigstens eine Behälter mit einer Behälterbehandlungsmaschine und/oder einer Betriebseinstellung der Behälterbehandlungsmaschine etikettiert wird, die basierend auf einer Kennzeichnung des Behälters gewählt wurde, kann das Etikettieren des wenigstens einen Behälters in der Behälterbehandlungsanlage flexibler gestaltet werden. So kann insbesondere ein Behälter basierend auf der Kennzeichnung erkannt und entsprechend etikettiert werden.

Wenn beispielsweise ein bestimmter Behälter mit einem bestimmten Produkt befüllt und mit einem bestimmten Etikett versehen werden soll, kann dieser Behälter entsprechend gekennzeichnet werden und dann, in der Behälterbehandlungsanlage, basierend auf dieser Kennzeichnung behandelt werden. Produktionsunterbrechungen für Umstellungen auf andere Behältertypen und/oder andere Produkte können somit vermieden oder wenigstens reduziert werden. Unter einem Behälter kann hierin insbesondere ein Gegenstand verstanden werden, der einen Hohlraum aufweist, der insbesondere dem Zweck dient, ein Produkt aufzunehmen und wenigstens teilweise von der Umgebung abzugrenzen. Der wenigstens eine Behälter kann insbesondere ein Behälter für eine Flüssigkeit, beispielsweise für ein Getränk, sein.

Bei dem wenigstens einen Behälter kann es sich insbesondere um eine Flasche handeln. Insbesondere kann der wenigstens eine Behälter eine Glas- und/oder Kunststoffflasche sein.

Der wenigstens eine Behälter kann auch einem Vorformling oder Preform, insbesondere aus einem thermoplastischen Kunststoff, für eine Blasformmaschine entsprechen.

Es kann insbesondere eine Vielzahl von Behältern, insbesondere zwei oder mehr Behälter, behandelt werden. Die Vielzahl von Behälter kann wenigstens zwei unterschiedliche Behälter oder Behältertypen umfassen. Die Vielzahl von Behälter kann insbesondere eine oder mehrere Glas- und/oder Kunststoffflaschen und/oder einen oder mehrere Vorformlinge umfassen.

Als "Behältertyp" kann hierin eine Art oder Sorte von Behältern, insbesondere mit gleichen Eigenschaften, verstanden werden. Mit anderen Worten können zwei oder mehr Behälter eines Behältertyps nicht oder bis auf fertigungstechnische oder maschinelle Schwankungen nicht voneinander unterschieden werden. Eine Ausnahme kann hierbei eine Kennzeichnung, beispielsweise eine in zwei Behälter eingespritzte oder eingeblasene Nummer, die für die Kavität der Spritzguss- oder blasformmaschine und/oder das Produktionsdatum des Behälters steht, bilden. Durch diese Nummer können sich zwei Behältern eines Behältertyps trotzdem unterscheiden.

Die Behälterbehandlungsanlage kann mehrere, insbesondere zwei oder mehr, Behälterbehandlungsmaschinen umfassen, insbesondere wobei die in der Behälterbehandlungsanlage zu behandelnden Behälter über Transportvorrichtungen von einer Behälterbehandlungsmaschine zur nächsten gefördert werden können.

Die Behälterbehandlungsanlage kann insbesondere derart ausgebildet und/oder konfiguriert sein, dass in einem Produktionsdurchlauf wenigstens zwei Behälter unterschiedlich behandelt werden können, insbesondere wobei in einem Produktionsdurchlauf wenigstens zwei unterschiedlich behandelte Behälter aus der Behälterbehandlungsanlage ausgebracht werden können.

Die Behälterbehandlungsanlage kann insbesondere wenigstens eine Behälterbehandlungsmaschine aufweisen, die wenigstens zwei voneinander unterschiedliche Garniturteile umfasst. Alternativ oder zusätzlich kann die Behälterbehandlungsanlage wenigstens eine Behälterbehandlungsmaschine aufweisen, für die eine Steuerungsvorrichtung der Behälterbehandlungsanlage wenigstens einen Betriebsparameter, insbesondere automatisch, variabel einstellen kann. Unter dem Begriff "Behandeln" kann hierin generell eine Manipulation des wenigstens einen Behälters verstanden werden. Beispielsweise kann beim Behandeln der wenigstens eine Behälter in seinem äußeren Erscheinungsbild, seiner Füllung und/oder seiner räumlichen Anordnung verändert werden.

Die Behälterbehandlungsanlage kann weiterhin, insbesondere als Behälterbehandlungsmaschinen, eine Blasformmaschine, eine Spritzgussvorrichtung zum Spritzgießen von Behältern, insbesondere von Vorformlingen, eine Füllvorrichtung, einen Rinser, eine Sterilisationsvorrichtung, einen Verschließer, eine Beschichtungseinrichtung, eine Behälterausrichtevorrichtung, ein Direktdruckaggregat für Etiketten und/oder Behälter, einen Transporteur (eine Transportvorrichtung), einen Packer und/oder eine Kommissioniervorrichtung (Palletierer) umfassen. Mit anderen Worten kann es sich bei der Behälterbehandlungsanlage um eine Abfüllanlage, insbesondere in der Lebensmittelindustrie, insbesondere in der Getränkeindustrie, handeln.

Die Füllvorrichtung, die Blasformmaschine, der Verschließer und/oder die Etikettiervorrichtung können insbesondere als Rundläufermaschinen ausgebildet sein.

Die Behälterbehandlungsanlage kann außerdem eine Prüf- oder Inspektionsvorrichtung umfassen. Die Sterilisationsvorrichtung kann einen Pasteur, insbesondere einen Tunnelpasteur zum Sterilisieren der schon verschlossen Behälter, aber auch andere Pasteure wie Kurzzeiterhitzungen für Produkte oder ähnliches umfassen.

Das Behandeln des wenigstens einen Behälters kann ein Formblasen, ein Füllen, ein Reinigen, ein Sterilisieren, ein Beschichten, ein Verschließen, ein Bedrucken, ein Etikettieren, ein Packen und/oder ein Kommissionieren des wenigstens einen Behälters umfassen und/oder einem solchen entsprechen.

Die wenigstens eine Betriebseinstellung wenigstens einer Behälterbehandlungsmaschine kann einer Einstellung oder Wahl eines Betriebsparameters oder Verfahrensparameters entsprechen. Eine Betriebseinstellung kann auch eine Zuordnung eines Behälters an einen vorherbestimmten Garniturteil einer Behälterbehandlungsmaschine umfassen.

Mit anderen Worten kann die wenigstens eine Betriebseinstellung einem variablen Parameter, der die Behandlung des wenigstens einen Behälters in der Behälterbehandlungsmaschine beeinflusst, entsprechen.

Im Falle einer Blasformmaschine, insbesondere umfassend eine Heizvorrichtung zum Temperieren von Vorformlingen, kann die wenigstens eine Betriebseinstellung beispielsweise einen Blasdruck, einen Zeitpunkt für einen Reckbeginn oder ein Herausziehen einer Reckstange, eine Reckgeschwindigkeit, einen Spülwinkel, innerhalb dessen die Behältnisse insbesondere durch die Reckstange gekühlt werden, einen Beginn für ein Vorblasen oder Fertigblasen oder eine Zeitdauer hierfür, eine Recyclingzeit, in der Blasluft zurückgewonnen wird, ein einzustellendes Temperaturprofil, einen Abstand von Heizstrahlern untereinander, eine Oberflächenkühlung und/oder eine Mündungskühlung der Vorformlinge in der Heizvorrichtung und/oder eine Temperatur der Blasformen umfassen.

Im Falle einer Füllvorrichtung kann die wenigstens eine Betriebseinstellung beispielsweise eine Wahl eines abzufüllenden Produkts, ein gewünschten Füllvolumen, eine Abfülltemperatur, eine CO₂-Dosierung, eine Druckbeaufschlagung des Behälters vor und/oder während des Füllens, eine stufenweise oder kontinuierliche Druckentlastung nach dem Füllen und/oder eine Menge einer Stickstoffbeaufschlagung umfassen.

Im Falle eines Verschließers (einer Verschließeinrichtung) kann die wenigstens eine Betriebseinstellung beispielsweise eine Wahl einer Rotationsgeschwindigkeit, eine Anzahl an Drehungen, eine Hub- und/oder Senkbewegung und/oder ein aufzubringendes Drehmoment umfassen.

Im Falle einer Etikettiervorrichtung kann die wenigstens eine Betriebseinstellung beispielsweise eine Wahl eines oder mehrerer Etiketten, eine Position eines Etiketts auf einem Behälter, eine Form und/oder eine Länge eines Etiketts (Für Flaschen kleineren Durchmessers ein kürzeres Aufrolletikett, für Flaschen größeren Durchmessers ein längeres Etikett, für hohe Flaschen ein längeres Schlauchetikett (Sleeve), für kurze Flasche ein kürzeres Schlauchetikett) und/oder einer Geschwindigkeitsregulierung eines Servoantriebs zum Drehen der Behälter in der Etikettiervorrichtung umfassen. Auf einer Rolle für Etiketten können auch unterschiedliche Typen von Etiketten wechselweise hintereinander angebracht sein. Sollte eine Flasche aufgrund eines Defekts vor der Etikettiermaschine ausgeworfen werden, kann die "Lücke" zwischen den Behältern dann durch ein Ausschleusen eines Etiketts von der Rolle geschlossen werden.

Im Falle einer Sterilisationsvorrichtung kann die wenigstens eine Betriebseinstellung beispielsweise eine Art und/oder Dauer einer Sterilisation umfassen.

Das Behandeln des wenigstens einen Behälters kann insbesondere mit der wenigstens einen ausgewählten Behälterbehandlungsmaschine und/oder unter Anwendung der wenigstens einen ausgewählten Betriebseinstellung der wenigstens einen Behälterbehandlungsmaschine durchgeführt werden.

Der Schritt des Behandelns kann insbesondere ein Zuführen und/oder Einbringen des wenigstens einen Behälters zu und/oder in die wenigstens eine ausgewählte Behälterbehandlungsmaschine umfassen. Dies kann beispielsweise mittels einer Weiche in der Transportvorrichtung der Behälterbehandlungsmaschine geschehen.

Alternativ oder zusätzlich kann der Schritt des Behandelns ein Einstellen der wenigstens einen Behälterbehandlungsmaschine auf die wenigstens eine ausgewählte Betriebseinstellung umfassen.

Mehrere Behälterbehandlungsmaschinen der Behälterbehandlungsanlage können insbesondere unabhängig voneinander einstellbar sein. Die wenigstens einen Behälterbehandlungsmaschine kann insbesondere derart ausgebildet und/oder konfiguriert sein, dass das Einstellen auf die wenigstens eine ausgewählte Betriebseinstellung ohne Betriebsunterbrechung durchgeführt werden kann.

Die Kennzeichnung ist eine elektronische, eine chemische und/oder eine physikalische Kennzeichnung sein. Mit Hilfe der Kennzeichnung kann der wenigstens eine Behälter und/oder der Behältertyp des wenigstens einen Behälters erkannt oder identifiziert werden.

Der Schritt des Kennzeichnens kann vor und/oder während des Behandelns des wenigstens einen Behälters in der Behälterbehandlungsanlage, insbesondere vor, nach und/oder während des Einbringens des wenigstens einen Behälters in die Behälterbehandlungsanlage, durchgeführt werden.

Der Schritt des Kennzeichnens kann nach dem Behandelns des wenigstens einen Behälters mit einer der Behandlungsmaschinen der Behälterbehandlungsanlage durchgeführt werden. Beispielsweise kann der wenigstens eine Behälter nach dem Füllen gekennzeichnet werden. Dadurch können beispielsweise gleichartige Behälter, die mit unterschiedlichen Produkten befüllt sind in den weiteren Behandlungsprozessen, beispielsweise beim Etikettieren, unterschieden werden.

Unter einer elektronischen Kennzeichnung kann hierbei insbesondere eine steuerungstechnische Kennzeichnung verstanden werden. Die elektronische Kennzeichnung kann beispielsweise durch eine Steuerungsvorrichtung der Behälterbehandlungsanlage durchgeführt werden. Bei einer elektronischen Kennzeichnung kann der wenigstens eine Behälter selbst unverändert bleiben, insbesondere optisch, physikalisch und/oder chemisch unverändert.

Eine elektronische Kennzeichnung des wenigstens einen Behälters kann eine Zuordnung einer Identifikationsnummer und/oder einer Identifikationsbezeichnung zum wenigstens einen Behälter, insbesondere mittels einer Steuerungsvorrichtung der Behälterbehandlungsanlage, umfassen. Beispielsweise kann die Steuerungsvorrichtung dem wenigstens einen Behälter, insbesondere in einem Speicherelement der Steuerungsvorrichtung, insbesondere temporär, eine Identifikationsnummer und/oder eine Identifikationsbezeichnung zuordnen.

Im Falle einer elektronischen Kennzeichnung kann das Erfassen der Kennzeichnung insbesondere ein Bestimmen einer Position des wenigstens einen Behälters, beispielsweise über eine Kameraüberwachung der Behälterbehandlungsanlage, umfassen. Alternativ oder zusätzlich kann das Erfassen in diesem Fall ein Verfolgen des wenigstens einen gekennzeichneten Behälters in der Behälterbehandlungsanlage mittels der Steuerungsvorrichtung der Behälterbehandlungsanlage umfassen.

Unter einer physikalischen und/oder chemischen Kennzeichnung kann hierin eine Kennzeichnung verstanden werden, die wenigstens eine physikalische und/oder chemische Eigenschaft des wenigstens einen Behälters verändert. Beispielsweise kann die physikalische und/oder chemische Kennzeichnung das äußere Erscheinungsbild des wenigstens einen Behälters verändern. Bei einer chemischen Kennzeichnung kann es sich um zusätzlich in den Vorformling eingespritztes Material aus einem anderen Werkstoff handeln. Sollte es sich beispielsweise bei dem Vorformling um einen PET (Polyethylenterephthalat)-Vorformling handeln, so könnten Teile in und/oder auf seiner Wandung mit einem anderen Kunststoff (PE (Polyethylen), HDPE (High Density Polyethylen), PP (Polypropylen), PA (Polyamid)) beim und/oder nach dem Spritzen versehen werden, beispielsweise im Overmoulding - Verfahren.

Die physikalische und/oder chemische Kennzeichnung entspricht einer Markierung des wenigstens einen Behälters. Die Markierung kann beispielsweise einen maschinenlesbaren Code, beispielsweise einen Barcode, umfassen. Die Markierung kann für das freie Auge sichtbar oder unsichtbar, beispielsweise mittels einer Substanz, die nur unter ultraviolettem Licht sichtbar ist, sein.

Im Fall einer physikalischen Kennzeichnung kann das Erfassen der Kennzeichnung ein Erfassen einer Markierung mit Hilfe eines Sensors umfassen. Der Sensor kann insbesondere ein optischer Sensor, beispielsweise eine Kamera, sein.

Die Markierung kann auf den wenigstens einen Behälter aufgedruckt werden und/oder mittels Laserbeschriftung aufgebracht werden. Alternativ oder zusätzlich kann die Markierung ein Element umfassen, welches auf den wenigstens eine Behälter aufgebracht wird, beispielsweise in einem In-Mold-Labeling-Verfahren. Dieses kann mit einer Vorrichtung, wie sie in der US 2003/146549 beschrieben ist, durchgeführt werden. Die Markierung kann ein Etikett und/oder einen RFID-Chip umfassen, die auf dem Behälter temporär oder permanent befestigt werden. Wenn der wenigstens eine Behälter in einer Blasformmaschine hergestellt wird kann beim Formblasen durch die verwendete Blasform eine Markierung, beispielsweise eine Nummerierung, in der Behälterwand erzeugt werden. Dabei kann die Oberflächenstruktur des Behälters verändert werden. Dies kann ähnlich zu dem Verfahren, welches in der EP 1,331,077 beschrieben ist, durchgeführt werden.

Die Markierung kann beispielsweise ein oder mehrere alphanumerische Zeichen und/oder ein oder mehrere Symbole umfassen.

Eine physikalische und/oder chemische Kennzeichnung kann insbesondere vor, während und/oder unmittelbar nach dem Ausbringen des Behälters aus der Behälterbehandlungsanlage entfernt werden.

Das Erfassen der Kennzeichnung kann mittels eines Sensors und/oder einer Steuerungsvorrichtung durchgeführt werden.

Das Erfassen der Kennzeichnung kann ein Erkennen des wenigstens einen Behälters basierend auf der Kennzeichnung umfassen.

Eine physikalische Kennzeichnung kann auch ein Einstellen und/oder Ändern des Gewichts des wenigstens einen Behälters umfassen. Das Erfassen der Kennzeichnung kann in diesem Fall mittels einer Wiegeeinrichtung, insbesondere in einer Füllvorrichtung mit Wägezelle für den leeren Behälter und/oder das abzufüllende Produkt, durchgeführt werden.

Es können wenigstens zwei Behälter mit einer unterschiedlichen Kennzeichnung gekennzeichnet werden, wobei die wenigstens zwei Behälter in der Behälterbehandlungsanlage mittels der unterschiedlichen Kennzeichnung voneinander unterschieden werden und wobei die wenigstens zwei Behälter aufgrund der Unterscheidung in einer oder mehreren Behälterbehandlungsmaschinen der Behälterbehandlungsanlage unterschiedlich behandelt werden und/oder unterschiedlichen Behälterbehandlungsmaschinen zugeführt werden. Dadurch können auf einfache und effiziente Art und Weise Behälter in einem Produktionsdurchlauf unterschiedlich in der Behälterbehandlungsanlage behandelt werden.

Die wenigstens zwei Behälter können insbesondere voneinander unterschiedliche oder gleichartige Behälter sein. Mit anderen Worten können die wenigstens zwei Behälter vom selben oder von einem unterschiedlichen Behältertyp sein.

Die wenigstens zwei Behälter können innerhalb eines Produktionsdurchlaufs aus der Behälterbehandlungsanlage ausgebracht werden. "In einem Produktionsdurchlauf" bedeutet in diesem Zusammenhang, dass die wenigstens zwei Behälter in einem Durchgang ausgebracht werden, also zwischen dem Ausbringen des ersten Behälters und des zweiten Behälters keine manuellen Umbauten durch eine Bedienperson an der Behälterbehandlungsanlage notwendig sind. Mit anderen Worten wird unter einem Produktionsdurchlauf eine Behandlung von mehreren Behältern ohne einen Stillstand der Behälterbehandlungsanlage zum Umrüsten der Behälterbehandlungsanlage verstanden.

Die Behälterbehandlungsanlage kann insbesondere für wenigstens einen Behandlungsprozess wenigstens zwei unterschiedliche Behälterbehandlungsmaschinen umfassen, insbesondere wobei eine der wenigstens zwei unterschiedlichen Behälterbehandlungsmaschinen zum Behandeln eines ersten Behältertyps ausgebildet und/oder konfiguriert ist und eine zweite der wenigstens zwei unterschiedlichen Behälterbehandlungsmaschinen zum Behandeln eines zweiten, insbesondere von ersten unterschiedlichen, Behältertyps ausgebildet und/oder konfiguriert ist. Beispielsweise kann die Behälterbehandlungsanlage wenigstens zwei Blasformmaschinen, Füllvorrichtungen, Etikettiervorrichtungen, Verschließer, Packer, Rinser, Sterilisationsvorrichtungen und/oder Kommissioniervorrichtungen aber auch zwei unterschiedliche Quellen für Behälter umfassen.

Die Behälterbehandlungsanlage kann derart ausgebildet und/oder konfiguriert sein, dass ein Behälter wahlweise einer der wenigstens zwei unterschiedlichen Behälterbehandlungsmaschinen für einen Behandlungsprozess zuführbar ist. Dies kann beispielsweise mittels einer Weiche einer Transportvorrichtung der Behälterbehandlungsanlage erreicht werden.

Insbesondere kann ein erster Behälter mit einer ersten Kennzeichnung für einen vorherbestimmten Behandlungsprozess einer ersten der wenigstens zwei unterschiedlichen Behälterbehandlungsmaschinen zugeführt werden, während ein zweiter Behälter mit einer zweiten Kennzeichnung für den vorherbestimmten Behandlungsprozess einer zweiten, von der ersten verschiedenen, der wenigstens zwei unterschiedlichen Behälterbehandlungsmaschinen zugeführt wird.

Das Verfahren umfasst außerdem ein Empfangen eines Auftrages und Kennzeichnen des wenigstens einen Behälters basierend auf dem empfangenen Auftrag. Der Auftrag kann insbesondere ein Kommissionierauftrag und/oder Fertigungsauftrag sein. Das Kennzeichnen des wenigstens einen Behälters basierend auf dem Auftrag kann insbesondere während und/oder unmittelbar nach dem Formblasen des Behälters in einer Blasformmaschine, während und/oder unmittelbar nach dem Herstellen des Behälters in einer Spritzgussmaschine und/oder während und/oder unmittelbar nach dem Einbringen des Behälters in die Behälterbehandlungsanlage.

Das Verfahren kann außerdem ein Modifizieren eines Auftrages und Kennzeichnen des wenigstens einen Behälters basierend auf dem modifizierten Auftrag umfassen. Wenn beispielsweise Behälter zur Qualitätskontrolle ausgeschleust werden, oder aufgrund eines Defekts ausgeschleust werden müssen, kann der Auftrag entsprechend modifiziert werden, um den Änderungen Rechnung zu tragen. Beispielsweise können in diesem Fall entsprechend mehr Behälter mit einem bestimmten Produkt gefüllt werden, um die Verluste durch Defekte/Qualitätskontrolle auszugleichen.

Die wenigstens eine Behälterbehandlungsmaschine kann eine Blasformmaschine umfassen, wobei eine Heizvorrichtung der Blasformmaschine, insbesondere eine Mikrowellenheizvorrichtung, derart ausgebildet und/oder konfiguriert ist, dass wenigstens zwei Behälter mit unterschiedlicher Kennzeichnung auf unterschiedliche Temperaturen und/oder Temperaturprofile erwärmt werden können.

Die Heizvorrichtung kann auch wenigstens eine Heizkammer mit Infrarotheizung und/oder Laserheizung umfassen. Die Heizvorrichtung kann wenigstens eine Heizkammer für ein individuelles Erwärmen eines Vorformlings, insbesondere auch für zwei oder mehrerer Vorformlinge, umfassen.

Die wenigstens eine Behälterbehandlungsanlage kann eine Blasformmaschine umfassen, wobei wenigstens zwei Behälter mit unterschiedlicher Kennzeichnung durch elektrisches Recken in der Blasformmaschine, insbesondere in einem Produktionsdurchlauf, unterschiedlich gereckt werden können.

Die Ausbringleistung der Behälterbehandlungsanlage kann variabel steuerbar sein.

Insbesondere kann die Ausbringleistung, also die Geschwindigkeit, mit der die Behälter behandelt werden, flexibel auf bestimmte Erfordernisse angepasst werden. Insbesondere kann dies mittels einer Heizung zum individuellen Erwärmen, beispielsweise einer Mikrowellenheizvorrichtung, in der Kombination mit einem elektrischen Recken der Vorformlinge erreicht werden. Die Erfordernisse können beispielsweise ein Wechsel einer Etikettenrolle oder eine Nachregulierung der Geschwindigkeit aufgrund eines zu hohen Aufschäumens karbonisierter Produkte nach dem Befüllen und vor dem Verschließen entsprechen. Eine Geschwindigkeitsanpassung kann aufgrund einer Erfassung der Kennzeichnung durchgeführt werden. Beispielsweise können größere Behältnisse eine längere Abfülldauer benötigen. Wenn ein großes Behältnis erkannt wird, kann so die Geschwindigkeit der Füllvorrichtung und/oder der ganzen Anlage angepasst werden.

Einer oder mehrere, insbesondere alle, der oben genannten Verfahrensschritte können teilweise oder vollständig automatisch oder automatisiert durchgeführt werden. Einer oder mehrere der oben genannten Verfahrensschritte können auch manuell, insbesondere durch Ausgabe entsprechender Informationen an eine Bedienperson, durchgeführt werden. Die Information kann beispielsweise eine automatisch erfasste Kennzeichnung umfassen.

Einer oder mehrere, insbesondere alle, oben genannten Verfahrensschritte können mehrfach, insbesondere für einen oder mehrere, insbesondere für alle, in der Behälterbehandlungsanlage zu behandelnden Behälter durchgeführt werden.

Einer oder mehrere, insbesondere alle, oben genannten Verfahrensschritte können für wenigstens einen Behälter mehrfach, insbesondere wiederholt, durchgeführt werden. Insbesondere können das Erfassen, das Auswählen und/oder das Behandeln für mehrere, insbesondere für jeden, Behälterbehandlungsprozess durchgeführt werden. Insbesondere können das Erfassen und Auswählen vor einem oder mehreren, insbesondere vor jedem, Behälterbehandlungsprozess durchgeführt werden. Dafür können insbesondere mehrere Vorrichtungen zum Erfassen der Kennzeichnung, beispielsweise Sensoren, vorgesehen sein.

Die Erfindung stellt außerdem eine Behälterbehandlungsanlage zum Behandeln wenigstens eines Behälters nach Anspruch 12 bereit.

Die Behälterbehandlungsanlage kann insbesondere eine Steuerungsvorrichtung umfassen, die derart ausgebildet und/oder konfiguriert ist, dass sie wenigstens eine Behälterbehandlungsmaschine und/oder wenigstens eine Betriebseinstellung der wenigstens einen Behälterbehandlungsmaschine basierend auf der Kennzeichnung des wenigstens einen Behälters auswählt. Die wenigstens eine Behälterbehandlungsmaschine kann insbesondere eine Blasformmaschine umfassen, wobei die Blasformmaschine eine Mikrowellenheizvorrichtung und/oder eine elektrische Reckvorrichtung umfasst.

Die Behälterbehandlungsanlage kann eine Abfüllanlage, insbesondere in der Getränkeindustrie, sein.

Weitere Merkmale und Vorteile der Erfindung werden nachfolgend anhand der beispielhaften Figuren erläutert. Dabei zeigt:
- Figur 1: eine Illustration eines beispielhaften Verfahrens zum Behandeln wenigstens eines Behälters;
- Figur 2: eine beispielhafte Behälterbehandlungsanlage zum Behandeln wenigstens eines Behälters;
- Figur 3: eine weitere beispielhafte Behälterbehandlungsanlage;
- Figur 4: eine weitere beispielhafte Behälterbehandlungsanlage;
- Figur 5: eine weitere beispielhafte Behälterbehandlungsanlage;
- Figur 6: eine weitere beispielhafte Behälterbehandlungsanlage;
- Figur 7: eine weitere beispielhafte Behälterbehandlungsanlage;
- Figur 8: eine weitere beispielhafte Behälterbehandlungsanlage;
- Figur 9: eine weitere beispielhafte Behälterbehandlungsanlage;
- Figur 10: eine weitere beispielhafte Behälterbehandlungsanlage;
- Figur 11: eine weitere beispielhafte Behälterbehandlungsanlage; und
- Figur 12: eine beispielhafte Blasstation einer beispielhaften Blasformmaschine mit einer Reckvorrichtung.

In den folgenden Beispielen wird angenommen, dass es sich bei den beispielhaften Behältern um Vorformlinge für Blasformmaschinen und/oder um Kunststoffflaschen, insbesondere für Getränke, handelt. Es sind jedoch auch andere Behälter, beispielsweise Glasflaschen, Beutel oder Dosen, denkbar.

In den Beispielen können ein oder mehrere Produkte in wenigstens zwei voneinander unterschiedliche Behältertypen gefüllt werden. "Voneinander unterschiedliche" kann in diesem Zusammenhang bedeuten, dass die wenigstens zwei Behältertypen sich in wenigstens einer chemischen und/oder physikalischen Eigenschaft voneinander unterscheiden und/oder dass sich die wenigstens zwei Behältertypen in ihrem äußeren Erscheinungsbild unterscheiden, beispielsweise in ihrer Etikettierung, ihrem zugeordneten Verschluss, ihrer zugeordneten Sterilisierung oder ihrer Beschichtung.

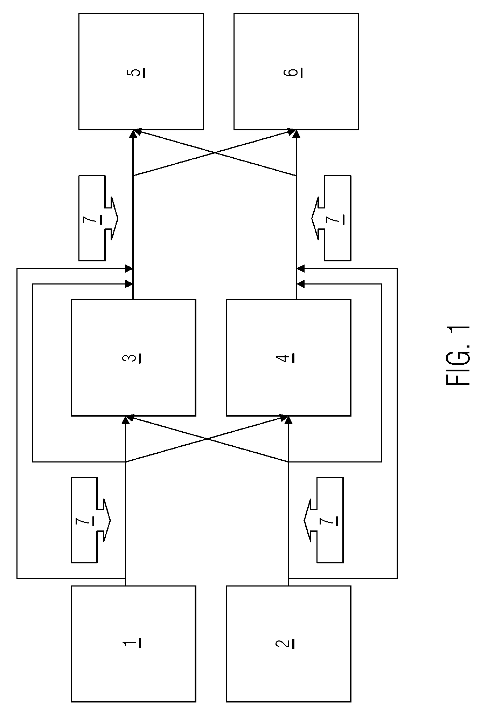

Figur 1 illustriert ein beispielhaftes Verfahren zum Behandeln wenigstens eines Behälters in einer Behälterbehandlungsanlage, insbesondere einer Abfüllanlage. Es sind mehrere Behälterbehandlungsmaschinen 1, 2, 3, 4, 5 und 6 vorgesehen. Die beispielhaften Behälterbehandlungsmaschinen 1 bis 6 können beispielsweise eine Blasformmaschine, eine Sterilisationsvorrichtung, einen Rinser, eine Füllvorrichtung, eine Etikettiervorrichtung, eine Packvorrichtung und/oder eine Palettier- oder Kommissioniervorrichtung umfassen. Die beispielhaften Behälterbehandlungsmaschinen 1 bis 6 sind durch Transportvorrichtungen miteinander verbunden. Mit anderen Worten kann wenigstens ein Behälter in der beispielhaften Abfüllanlage mittels einer Transportvorrichtung von wenigstens einer Behälterbehandlungsmaschine zu wenigstens einer weiteren Behälterbehandlungsmaschine gefördert werden.

In dem beispielhaften Verfahren zum Behandeln wenigstens eines Behälters wird wenigstens ein Behälter mit einer Kennzeichnung gekennzeichnet. Dadurch kann ein korrektes Behandeln des Behälters erreicht werden, insbesondere in dem basierend auf der Kennzeichnung wenigstens eine auf den Behältertyp abgestimmte Behälterbehandlungsmaschine der Abfüllanlage ausgewählt wird und/oder indem wenigstens eine Betriebseinstellung wenigstens einer Behälterbehandlungsmaschine der Abfüllanlage entsprechend dem Behältertyp gewählt wird.

Dazu ist im Bereich mehrerer Transportvorrichtungen im Beispiel der Figur 1 eine Vorrichtung 7 zum Erfassen der Kennzeichnung des wenigstens einen Behälters vorgesehen. Bei der Vorrichtung 7 kann es sich beispielsweise um einen optischen Sensor, insbesondere um eine Kamera handeln. Alternativ kann es sich bei der Vorrichtung 7 um einen Barcodescanner oder um einen Infrarotsensor bei einer thermischen Kennzeichnung handeln.

Nachdem ein beispielhafter Behälter in der Behälterbehandlungsmaschine 1 behandelt wurde, kann dieser in Richtung der Behälterbehandlungsmaschine 3 gefördert werden. Mittels einer Vorrichtung 7 kann eine Kennzeichnung des wenigstens einen Behälters erfasst werden. In weiterer Folge kann wenigstens eine Betriebseinstellung der Behälterbehandlungsmaschine 3 basierend auf der erfassten Kennzeichnung ausgewählt werden. Beispielsweise kann es sich bei der Behälterbehandlungsmaschine 3 um eine Etikettiervorrichtung handeln, wobei wenigstens ein Etikett, mit dem der wenigstens eine Behälter in der Behälterbehandlungsmaschine 3 versehen wird, basierend auf der Kennzeichnung ausgewählt wird. Es wäre auch denkbar, dass es sich bei der Betriebseinstellung um die Positionierung eines Etiketts oder ähnliches handelt.

Alternativ oder zusätzlich kann wenigstens eine Behälterbehandlungsmaschine der Behälterbehandlungsanlage basierend auf der erfassten Kennzeichnung ausgewählt werden. Beispielsweise kann es sich bei den Behälterbehandlungsmaschinen 3 und 4 jeweils um eine Etikettiervorrichtung oder um einzelne Etikettieraggregate einer Etikettiervorrichtung handeln, wobei die Behälterbehandlungsmaschine 3 zum Etikettieren eines ersten Behältertyps vorgesehen ist, während die Behälterbehandlungsmaschine 4 zum Etikettieren eines zweiten, vom ersten unterschiedlichen, Behältertyps vorgesehen ist. Beispielsweise kann die Behälterbehandlungsmaschine 3 die Behälter mit einem Sleeve und die Behälterbehandlungsmaschine 4 mit einem Rundumetikett, insbesondere welches "aufgerollt" wird, etikettieren.

Basierend auf der durch die Vorrichtung 7 erfassten Kennzeichnung kann erkannt werden, ob es sich bei dem wenigstens einen Behälter um einen Behälter des ersten oder zweiten Behältertyps handelt. Daraufhin kann der wenigstens eine Behälter entsprechend entweder der Behälterbehandlungsmaschine 3 oder 4 zugeführt werden. Alternativ kann eine Behandlung auch übersprungen werden, insbesondere wenn beispielsweise keine Etikettierung für einen bestimmten Behältertyp erforderlich ist.

Die Kennzeichnung des Behälters kann eine elektronische, eine physikalische und/oder eine chemische Kennzeichnung sein.

Bei einer elektronischen Kennzeichnung wird im Gegensatz zur physikalischen und/oder chemischen Kennzeichnung der Behälter in seinen physikalischen und/oder chemischen Eigenschaften bzw. in seinem äußeren Erscheinungsbild nicht verändert. Die elektronische Kennzeichnung kann durch eine Steuerungsvorrichtung durchgeführt werden und einem Behälter eine Identifikationsnummer oder -bezeichnung zuordnen.

Eine physikalische und/oder chemische Kennzeichnung der Behälter kann einer Markierung entsprechen. Die Markierung kann für das freie Auge sichtbar oder unsichtbar, beispielsweise mittels einer Substanz, die nur unter ultraviolettem Licht sichtbar ist, sein.

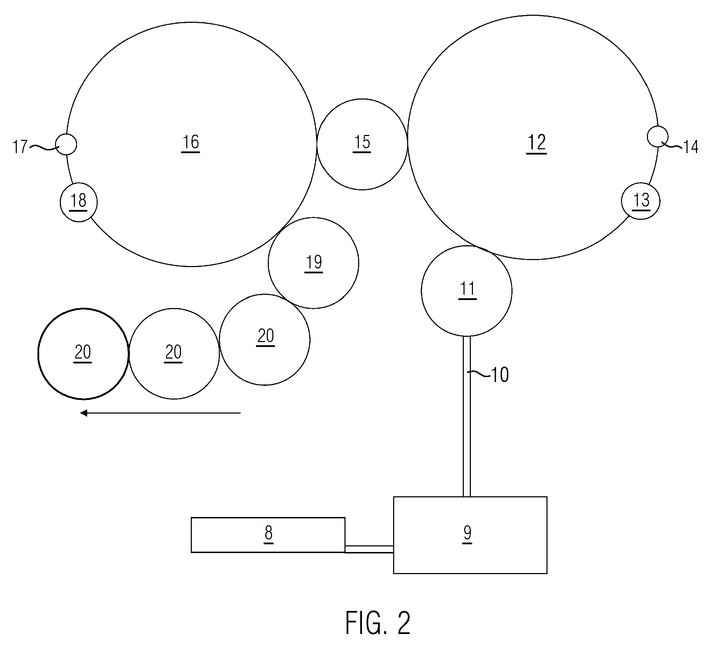

Figur 2 zeigt eine beispielhafte Behälterbehandlungsanlage, insbesondere einen Teil einer Abfüllanlage zum Befüllen eines Behälters, beispielsweise einer Kunststoffflasche, mit einem Getränk. Die beispielhafte Behälterbehandlungsanlage umfasste eine Schütte 8, in der Vorformlinge oder Preforms gelagert werden. Die Vorformlinge können unterschiedliche Vorformlingstypen umfassen. In einer Sortiervorrichtung 9 können die unterschiedlichen Vorformlingstypen sortiert werden und danach über eine Zuführschiene und einen Sägezahnstern 11 in eine Heizvorrichtung 12, insbesondere eine Mikrowellenheizvorrichtung, eingebracht werden.

Die Heizvorrichtung 12 kann wenigstens zwei voneinander unterschiedliche Heizkammern 13 und 14 umfassen, wobei Vorformlinge in den Heizkammern 13 und 14 unterschiedlich thermisch konditioniert werden. Beispielsweise kann ein erster Vorformling in der ersten Heizkammer 13 auf eine unterschiedliche Temperatur erwärmt werden als ein zweiter Vorformling in der zweiten Heizkammer 14. Der erste Vorformling kann dabei insbesondere unterschiedlich vom zweiten Vorformling sein, sich also in wenigstens einer physikalischen und/oder chemischen Eigenschaft unterscheiden. Der erste Vorformling kann sich insbesondere in seinem äußeren Erscheinungsbild, beispielsweise in seiner geometrischen Form und/oder Größe, vom zweiten Vorformling unterscheiden.

Weitere Beispiele für eine physikalische Eigenschaft können hierbei ein Durchmesser, insbesondere ein Neckdurchmesser kurz oberhalb oder unterhalb eines Tragrings, eine Länge, eine Gewindeart für einen Verschluss, die Tatsache, ob ein Tragring vorhanden ist oder eine Farbe sein.

Die mindestens zwei Heizkammern 13, 14 zum unterschiedlichen Erwärmen der Vorformlinge können auch gleicher Bauweise sein, jedoch die zwei unterschiedlichen Vorformlinge unterschiedlich behandeln. Beispielsweise kann sich die Behandlung zweier unterschiedlich zu behandelnden Vorformlinge dadurch unterscheiden, dass eine Dauer des Heizens oder eine eingebrachte Wärme, ein Temperaturprofil in Längsachse des Vorformlings und/oder ein Temperaturprofil in Umfangsrichtung des Vorformlings unterschiedlich gewählt wird.

Nach der thermischen Konditionierung in der Heizvorrichtung 12 können die Vorformlinge über eine Transfereinrichtung 15 in eine Blasformmaschine 16 eingebracht werden. Die Blasformmaschine 16 kann wenigstens zwei Blasformstationen 17 und 18 aufweisen, in denen Vorformlinge zu unterschiedlichen Kunststoffflaschen ausgeformt werden können.

Die ausgeformten Kunststoffbehälter können dann über einen Auslaufstern 19 und einen oder mehrere Transfersterne 20 einer weiteren Behälterbehandlungsmaschine, beispielsweise einem Füller, zugeführt werden.

Es kann auch ein Preformrinser und/oder Preformsterilisator, insbesondere ein Linear- oder Rundlaufrinser, für die Vorformlinge vorgesehen sein. Es können auch unterschiedliche Zufuhrschienen 10 für unterschiedliche Vorformlinge vorgesehen sein. Bei der Sortiervorrichtung 9 kann es sich um einen Rollensortierer mit unterschiedlichen Geometrien oder Abständen für Vorformlinge mit unterschiedlichem Neckdurchmesser handeln.

Bei einem Vertikalförderer für die Vorformlinge kann der Abstand von Aufnahmen für die Vorformlinge variieren.

Die Heizdorne in den Heizkammern 13 und 14 können unterschiedlichen Durchmesser, Höhe, Hub- oder Ausrichtung aufweisen.

Die Transportklammern in den Transfereinrichtungen 15, 19, 20 aber auch in den anderen Behälterbehandlungsmaschinen 11, 12, 16 können einen unterschiedlichen Aufnahmedurchmesser oder eine unterschiedliche Ausrichtung aufweisen.

Die Heizvorrichtung 12 kann Abschirmplatten mit unterschiedlichem Durchmesser, der je nach Windungsbereich der Vorformlinge variieren kann, aufweisen.

Der Einlaufstern 11, insbesondere ein Sägezahnstern, kann zum Transportieren von unterschiedlichen Vorformlingen verwendet werden.

Blasformen, Böden und/oder Blasdüsen innerhalb der Blasstationen 17 und 18 können voneinander unterschiedlich ausgebildet sein.

In der Blasformmaschine 16 können wenigstens zwei verschiedene Reckkurven, Bodenkurven oder Formträgerkurven vorgesehen sein. Auch die Reckanschläge können für die wenigstens zwei unterschiedlichen Blasstationen 17 und 18 unterschiedlich ausgebildet sein.

Die Flaschenorientierung nach dem Auslaufstern 19 (und dem Halter hierfür) kann variieren. Speziell bei Produktion von Rechteckflaschen können diese ausgerichtet werden. Wenn gleichzeitig runde Flaschen produziert werden, müssen diese nicht unbedingt ausgerichtet werden. Wenigstens zwei Behälter können auch voneinander unterschiedlich ausgerichtet werden.

Für wenigstens einen Behälter kann im Beispiel der Figur 2 wenigstens ein Garniturteil der Blasformmaschine basierend auf einer Kennzeichnung des wenigstens einen Behälters gewählt werden. Beispielsweise kann der wenigstens eine Behälter basierend auf einer erfassten Kennzeichnung des wenigstens einen Behälters entweder mit der Heizkammer 13 oder der Heizkammer 14 und/oder entweder mit der Blasstation 17 oder mit der Blasstation 18 behandelt werden.

Alternativ oder zusätzlich kann wenigstens ein Betriebsparameter der Heizvorrichtung 12 und/oder der Blasformmaschine 16 basieren auf der erfassten Kennzeichnung eingestellt werden. Beispielsweise kann die Temperatur in der Heizkammer 13 oder 14 oder der Blasdruck in der Blasstation 17 oder 18 basierend auf der erfassten Kennzeichnung gewählt werden.

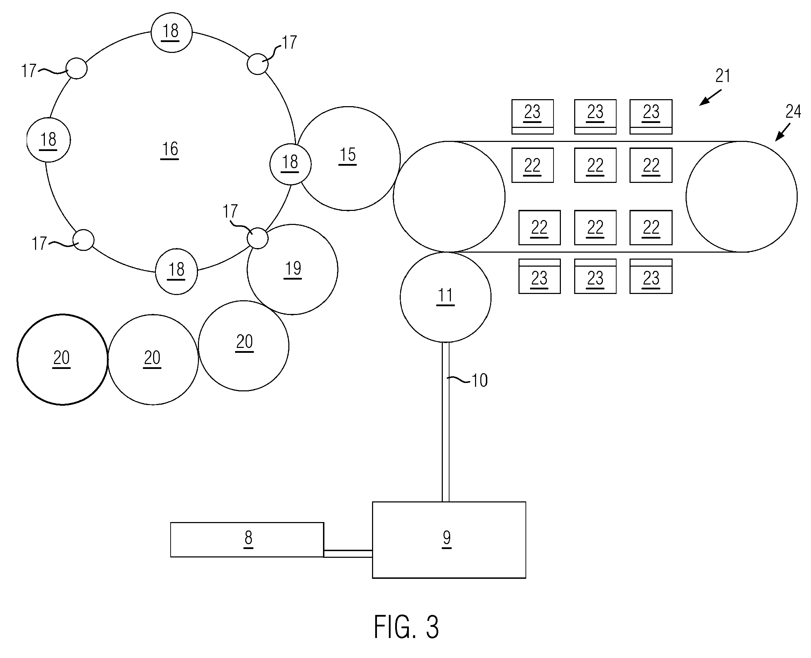

Figur 3 zeigt eine weitere beispielhafte Behälterbehandlungsmaschine. Es ist wiederum ein Teil einer Abfüllanlage gezeigt, der eine Heizvorrichtung und eine Blasformmaschine 16 umfasst. Im Gegensatz zum Beispiel in Figur 2 ist die Heizvorrichtung in diesem Beispiel als Linearofen 21 ausgebildet. Der Linearofen 21 umfasst eine Transportvorrichtung 24, mit welcher Vorformlinge durch den Linearofen 21 gefördert werden können. Außerdem sind mehrere Heizkästen 23 mit Infrarotstrahlern vorgesehen und denen gegenüberliegende Reflektoren 22.

Der Linearofen 21 kann derart ausgebildet und/oder konfiguriert sein, dass wenigstens zwei Vorformlinge unterschiedlich temperiert werden können. Insbesondere kann wenigstens eine Betriebseinstellung des Linearofens 21 basierend auf einer erfassten Kennzeichnung eines Vorformlings wählbar sein. Beispielsweise kann die Geschwindigkeit der Transportvorrichtung 24 basierend auf der erfassten Kennzeichnung eingestellt werden. Alternativ oder zusätzlich kann der Abstand eines Vorformlings von den Heizkästen 23 basierend auf der erfassten Kennzeichnung gewählt werden. Weitere beispielhafte Betriebseinstellungen werden weiter unten erläutert.

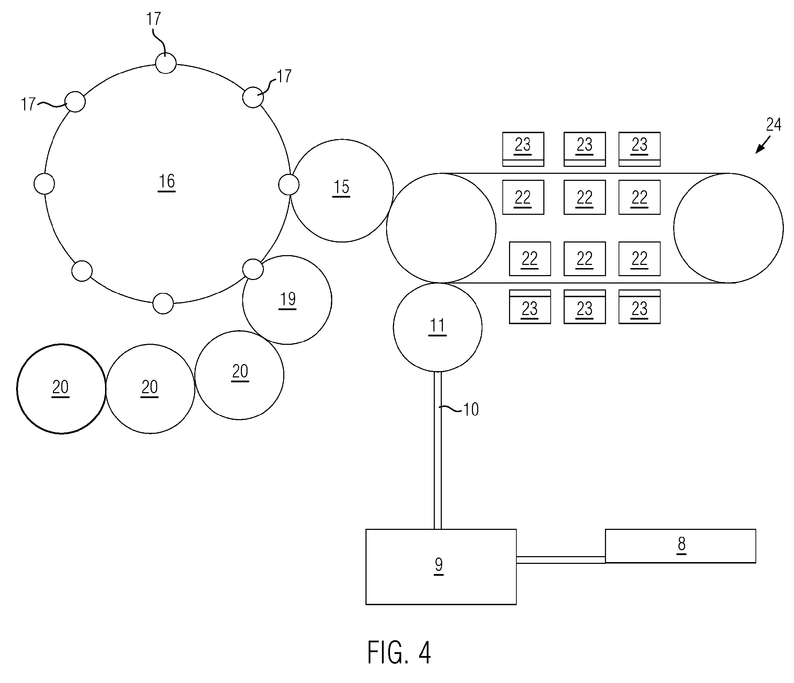

Figur 4 zeigt eine ähnliche Behälterbehandlungsanlage zu der in Figur 3 gezeigten, wobei die Blasformmaschine 16 jedoch nur eine Art von Blasstation 17 aufweist. In diesem Fall können dennoch gewisse Betriebseinstellungen der Blasstationen 17 basierend auf einer erfassten Kennzeichnung eines Behälters gewählt werden, beispielsweise der verwendete Blasdruck oder ähnliches. Die Blasstationen 17 und 18 der Figur 2 können darüber hinaus beispielsweise unterschiedliche Blasformen aufweisen. Insbesondere ist die in dieser Figur gezeigte Ausführung für Behälter unterschiedlicher Farbe geeignet, die zwar die gleiche Form nach dem Blasen aufweisen, aber sich farblich unterscheiden. Insbesondere kann für die Behandlung von Behältern unterschiedlicher Farbe ein Mikrowellenofen verwendet werden.

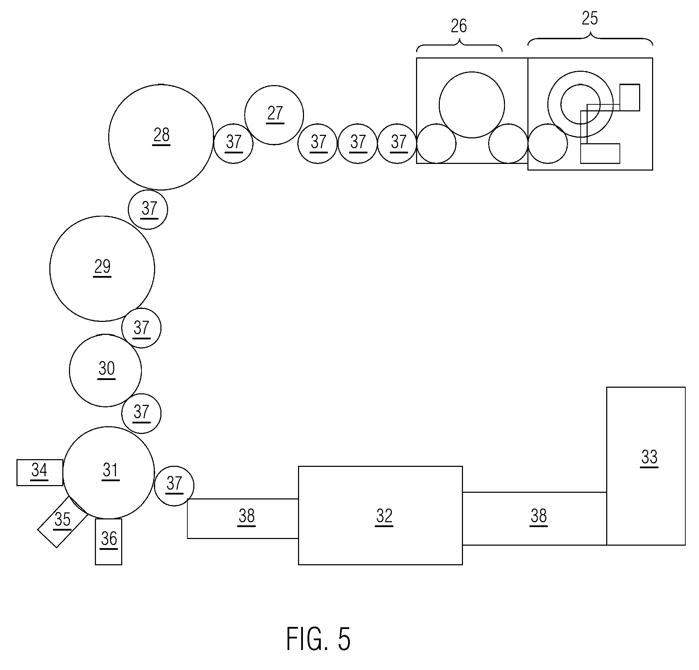

Figur 5 zeigt eine weitere beispielhafte Abfüllanlage, umfassend ein Spritzmodul 25 zum Erzeugen von Vorformlingen durch Spritzgießen, eine Blasformmaschine 26, eine Sterilisationsvorrichtung 27, einen Rinser 28, eine Füllvorrichtung 29, einen Verschließer 30, eine Etikettiervorrichtung 31, einen Packer 32 und einen Palettierer 33. Die einzelnen Behandlungsmaschinen sind in diesem Fall entweder durch Transfersterne 37 oder durch Linearförderer 38 miteinander verbunden.

Die Blasformmaschine 26 kann insbesondere ein Blasrad, eine Heizvorrichtung, eine Preformsterilisationsvorrichtung (E-beam (Elektronenstrahlen) oder Wasserstoffperoxid) und/oder ein Extra-Modul zur Temperaturprofilierung eines Preforms mittels temperierten, mit der Preformwand in Kontakt tretenden Klammern umfassen. In dem Extra-Modul kann ein Preform bereichsweise (an den Kontaktstellen) abgekühlt werden. Dadurch kann das Extra-Modul dazu geeignet sein, den Preform in Umfangsrichtung zu profilieren (preferential heating).

In diesem Beispiel kann ein Behälter, beispielsweise ein Vorformling oder ein aus einem Vorformling hergestellter Kunststoffbehälter mit einer Kennzeichnung versehen werden. Die Kennzeichnung kann eine physikalische Kennzeichnung, beispielsweise durch Laserbeschriftung oder eine elektronische Kennzeichnung durch eine Steuerungsvorrichtung der Abfüllanlage sein. Basierend auf der Kennzeichnung kann wenigstens eine Betriebseinstellung wenigstens einer der Behälterbehandlungsmaschinen ausgewählt werden. Dadurch ist es insbesondere möglich, wenigstens zwei Behälter mit einer unterschiedlichen Kennzeichnung mittels der unterschiedlichen Kennzeichnung voneinander zu unterscheiden und aufgrund der Unterscheidung in einer oder mehreren der Behälterbehandlungsmaschinen unterschiedlich zu behandeln.

Beispielsweise kann im Füller 29 das abzufüllende Produkt basierend auf einer erfassten Kennzeichnung gewählt werden. Dazu kann der Füller insbesondere derart ausgebildet sein, dass er wenigstens zwei unterschiedliche Produkte in einem Produktionsdurchlauf, also ohne Betriebsunterbrechung für Umstellungsarbeiten, abfüllen kann.

Der Füller 29 kann beispielsweise ein Füllventil zum Mischen unterschiedlicher Getränkeprodukte umfassen. Ein derartiges Füllventil ist beispielsweise aus der WO 2009/013523 bekannt. Durch das Vermischen von unterschiedlichen Getränken, beispielsweise Milch mit unterschiedlichem Fettgehalt, am Ventil können unterschiedliche Getränke innerhalb einer Füllerrunde, d. h. in einem Produktionsdurchlauf, abgefüllt werden.

Es können auch unterschiedliche Produkte in einem Produktionsdurchlauf abgefüllt werden. Hierfür können im Füller zumindest zwei Kessel für unterschiedliche Produkte angeordnet sein. Sollten zur Abfüllung der zwei unterschiedlichen Produkte zwei unterschiedliche Füllventile benötigt werden, so können auch im Füller unterschiedliche Ventile angeordnet sein. Auch die Messmethode zur Bestimmung der Abfüllmenge und/oder der Abfüllhöhe können sich unterscheiden. Beispiele für unterschiedliche Füllventile wären ein Langrohrfüllventil und ein Kurzrohrfüllventil.

Die Etikettiervorrichtung 31 kann mehrere, in diesem Beispiel drei, Etikettieraggregate 34, 35 und 36 umfassen, die zum Aufbringen unterschiedlicher Etiketten vorgesehen sein können. Entsprechend einer erfassten Kenzeichnung wenigstens eines Behälters kann eines der Etikettieraggregate 34 bis 36 zum Etikettieren des wenigstens einen Behälters gewählt werden.

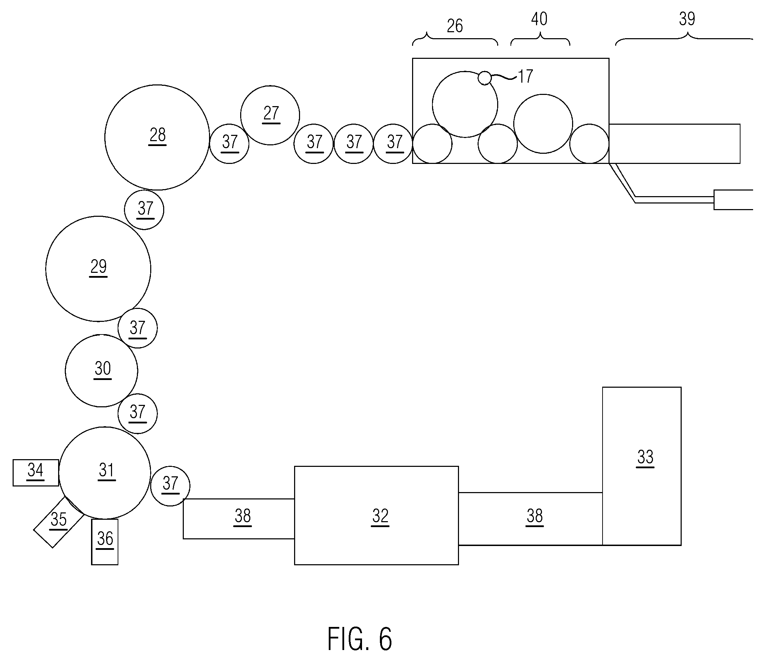

Figur 6 zeigt eine weitere beispielhafte Abfüllvorrichtung. Die Abfüllvorrichtung entspricht im Wesentlichen der beispielhaften Abfüllvorrichtung in Figur 5, wobei anstelle des Spritzmoduls 25 eine Preformzuführung 39 mit zugehöriger Heizvorrichtung 40 vorgesehen ist. In diesem Fall handelt es sich also um ein Zwei-Schritt-Verfahren, in welchem die Vorformlinge zunächst in einer separaten Spritzgießvorrichtung hergestellt werden und dann in der Abfüllanlage behandelt werden.

Obwohl hier nicht separat dargestellt kann die hier gezeigte Abfüllanlage vor einer oder vor mehreren, insbesondere vor allen, Behälterbehandlungsmaschinen eine Vorrichtung zum Erfassen einer Kennzeichnung umfassen. Dabei kann es sich um einen Sensor, beispielsweise um eine Kamera, handeln. Basierend auf der erfassten Kennzeichnung eines Behälters kann dann wenigstens eine Betriebseinstellung wenigstens einer Behälterbehandlungsmaschine gewählt werden.

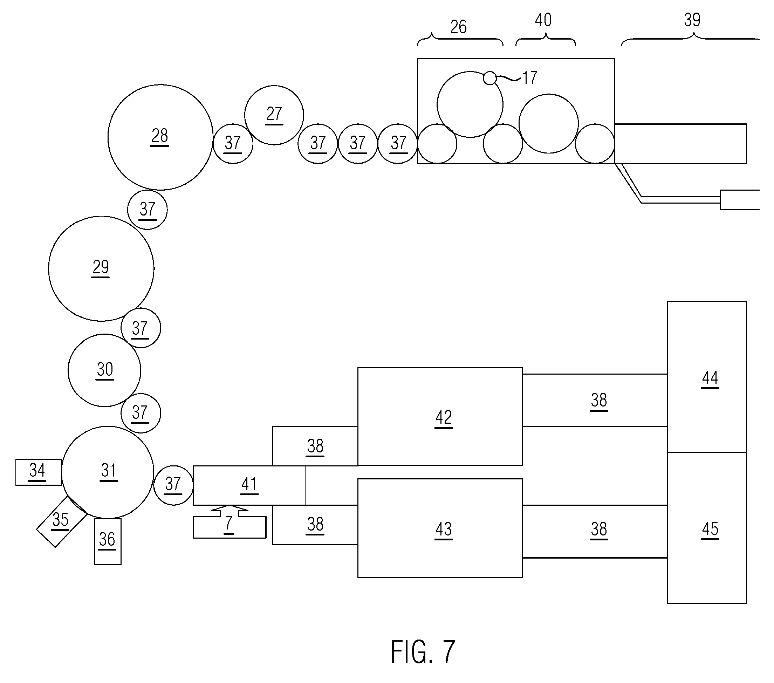

Figur 7 zeigt eine weitere beispielhafte Abfüllanlage. Die in Figur 7 gezeigte Abfüllanlage unterscheidet sich von der Abfüllanlage in Figur 6 darin, dass nach der Etikettiervorrichtung 31 eine Vorrichtung 7 zum Erfassen einer Kennzeichnung wenigstens eines Behälters vorgesehen ist und eine Weiche 41, welche den wenigstens einen Behälter basierend auf der erfassten Kennzeichnung einem der beiden Packer 42, 43 zuordnet. Mit einem der beiden Lineartransporter 38 wird der wenigstens eine Behälter dann entweder dem Palettierer 44 oder dem Palettierer 45 zugeführt.

Beispielsweise kann ein Behälter mit einer ersten Kennzeichnung dem ersten Packer 42 zugeführt werden, während ein Behälter mit einer zweiten, von der ersten unterschiedlichen, Kennzeichnung dem zweiten Packer 43 zugeführt wird. Die Behälter können beispielsweise unterschiedlichen Produkten entsprechen und/oder unterschiedlichen Behältern.

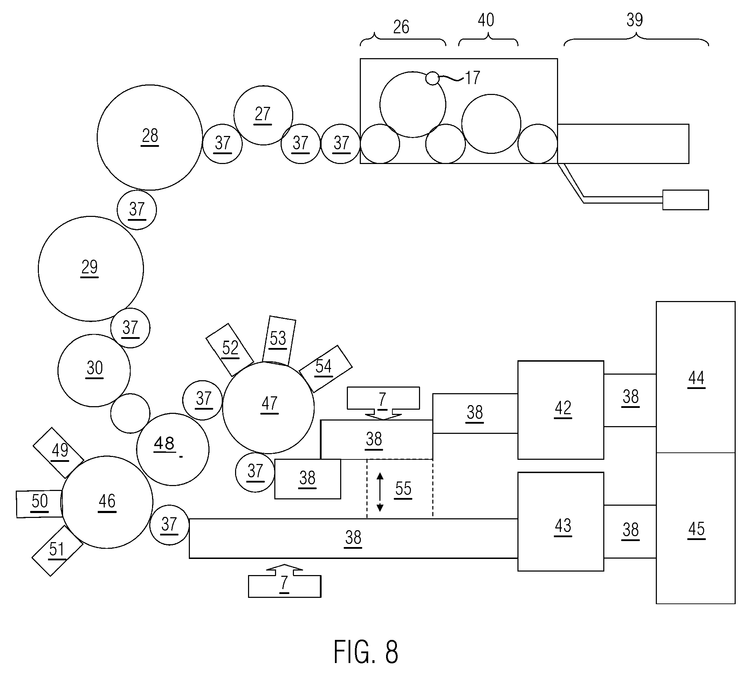

Figur 8 zeigt eine weitere beispielhafte Abfüllanlage. In diesem Fall sind eine erste Etikettiervorrichtung 46 und eine zweite Etikettiervorrichtung 47 vorgesehen, die jeweils drei Etikettieraggregate 49, 50, 51 bzw. 52, 53, 54 aufweisen. Ein Zuführstern 48 wählt eine der beiden Etikettiervorrichtungen 46 oder 47 basierend auf einer erfassten Kennzeichnung wenigstens eines Behälters aus. Die erste Etikettiervorrichtung 46 kann beispielsweise zum Etikettieren eines mit einem ersten Produkt gefüllten Behälters vorgesehen sein, während die zweite Etikettiervorrichtung 47 zum Etikettieren von Behältern, die mit einem zweiten Produkt gefüllt sind, vorgesehen ist. Bei dem Zuführstern 48 kann es sich um einen Stern handeln, wie er beispielsweise in der DE 10 2006 023 531 beschrieben wird.

Im Gegensatz zu Figur 7 umfasst die Abfüllanlage in Figur 8 außerdem jeweils eine Vorrichtung 7 zum Erfassen einer Kennzeichnung eines Behälters, die dem Packer 42 bzw 43 vorgeschaltet sind. Basierend auf der erfassten Kennzeichnung kann ein in der Etikettiervorrichtung 47 etikettierter Behälter dann entweder dem Packer 42 und dem Palettierer 44 zugeführt werden oder, alternativ, dem Packer 43 und dem Palettierer 45. Dafür ist zusätzlich eine Austauschvorrichtung 55 vorgesehen, welche ein Zuführen eines in der Etikettiervorrichtung 47 etikettierten Behälters an den Packer 43 und den Palettierer 45 erlaubt.

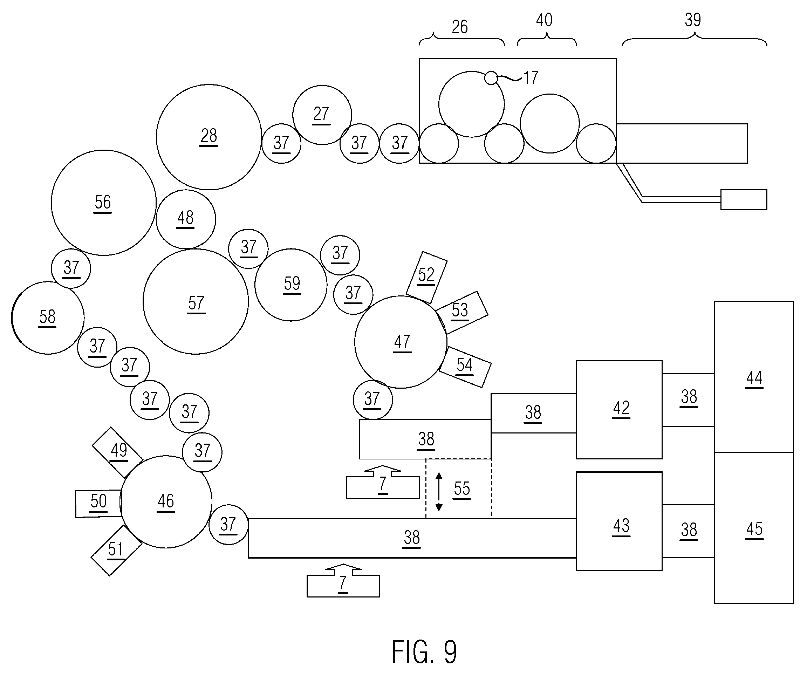

Figur 9 zeigt eine weitere beispielhafte Abfüllanlage. In diesem Beispiel sind auch zwei Füller 56 bzw. 57 und zwei Verschließer 58 bzw. 59 vorgesehen. Durch einen Auswahlstern 48 wird ein Behälter basierend auf einer erfassten Kennzeichnung entweder dem ersten Füller 56 oder dem zweiten Füller 57 zugeführt. Die beiden Füller 56 und 57 können beispielsweise unterschiedliche Produkte abfüllen. Die Verschließer 58 und 59 können unterschiedliche Verschlüsse auf die Behälter aufbringen.

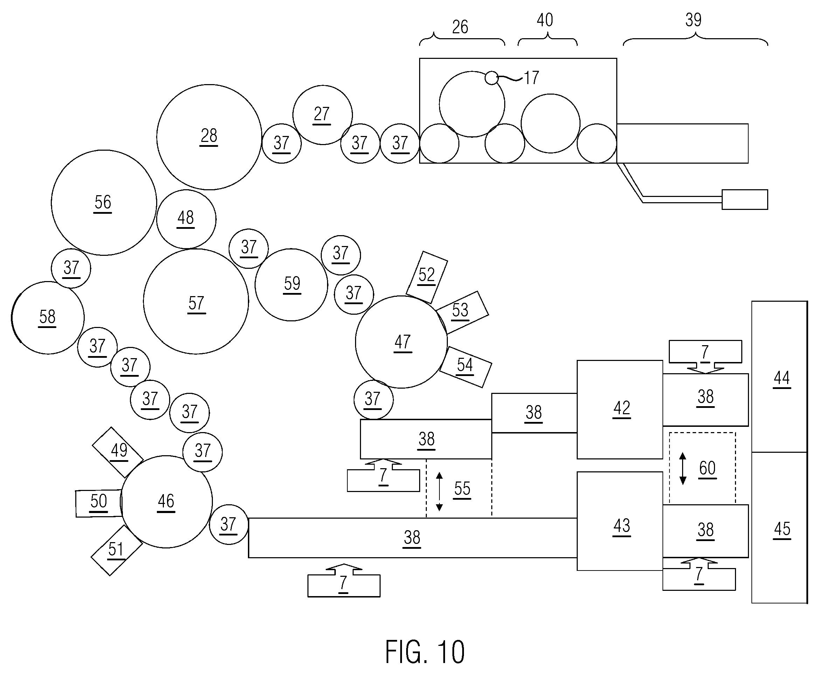

Figur 10 zeigt eine weitere beispielhafte Abfüllanlage. Zusätzlich zu den in Figur 9 gezeigten Elementen sind jeweils eine weitere Vorrichtung 7 zum Erfassen einer Kennzeichnung wenigstens eines Behälters vor dem Palettierer 44 bzw. vor dem Palettierer 45 vorgesehen. Eine zusätzliche Austauschvorrichtung 60 erlaubt es, basierend auf der erfassten Kennzeichnung, einen im Packer 42 behandelten Behälter entweder dem Palettierer 44 oder dem Palettierer 45 zuzuführen bzw. einen im Packer 43 behandelten Behälter entweder dem Palettierer 44 oder dem Palettierer 45 zuzuordnen. Eine Kennzeichnung kann auch das Produkt oder der Verschluss selbst sein und/oder auf dem Verschluss aufgebracht sein.

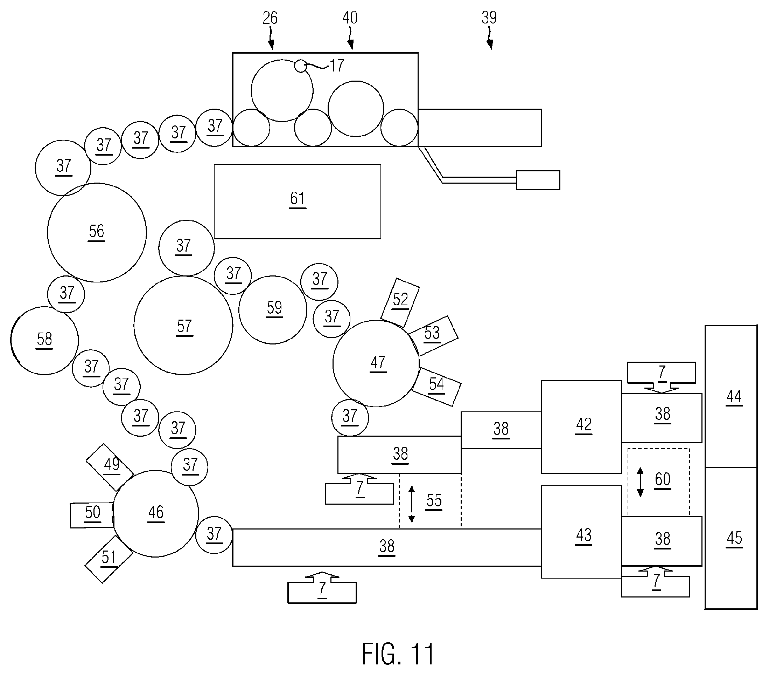

Figur 11 zeigt eine weitere beispielhafte Abfüllanlage. Darin ist zusätzlich ein Unscrambler 61 als zusätzliche Quelle neben der Blasmaschine für einzusortierende und auszurichtende Mehrwegbehälter vorgesehen, welcher dem Füller 57 Behälter zuführt. Zwischen Unscrambler 61 und Füller 57 kann eine (nicht gezeigte) Vorrichtung zum Erfassen einer Kennzeichnung des Behälters vorgesehen sein. Die Sterilisationsvorrichtung 27 und der Rinser 28 sind in Figur 11 der Übersichtlichkeit halber nicht gezeigt.

In dieser Behälterbehandlungsanlage können Paletten oder Gebinde ausgebracht werden, die sowohl Mehrwegbehälter aus dem Unscrambler 61 als auch Einwegbehälter aus der Blasmaschine 26 aufweisen. Hier kann sich insbesondere das Handling der Behälter unterscheiden, insbesondere in Abhängigkeit von der Kennzeichnung.

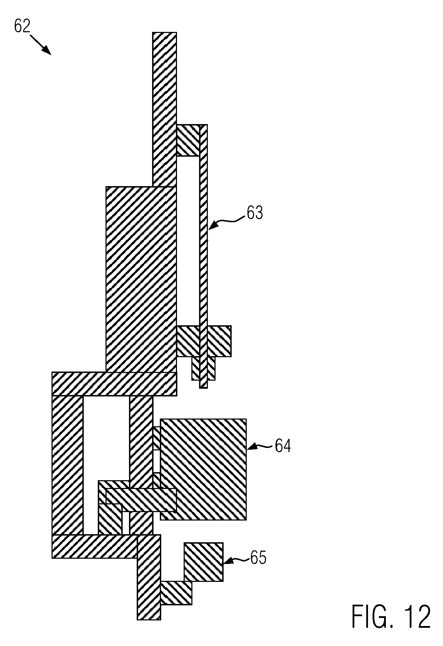

Figur 12 zeigt eine beispielhafte Blasstation 62 mit einer Reckvorrichtung zum Recken eines Vorformlings in einer Blasformmaschine. Die beispielhafte Reckvorrichtung umfasst eine Reckstange 63, eine Blasform 64 und einen Blasformboden 65. Bei der Reckvorrichtung 62 kann es sich insbesondere um eine Reckvorrichtung handeln, welche ein elektrisches Recken ermöglicht, also eine flexible Steuerung der Geschwindigkeit, der Position und/oder der Zeit der Reckstange 63 und/oder Profile aus Kombinationen von Geschwindigkeit, Position und/oder Zeit, erlaubt.

Insbesondere kann ein Antrieb der Reckstange 63 ein Linearantrieb oder ein Servomotor sein, insbesondere mit einer üblichen Übertragung einer Drehbewegung in eine lineare Bewegung, beispielsweise mittels einer Gewindespindel.

Die oben beschriebenen Abfüllanlagen erlauben ein flexibles Behandeln von Behältern basierend auf einer erfassten Kennzeichnung der Behälter. Insbesondere können wenigstens zwei voneinander unterschiedliche Formate in einem Produktionsdurchlauf verarbeitet werden. Unter einem "Format" kann hier insbesondere eine Kombination aus Verpackung und Produkt verstanden werden. Die wenigstens zwei unterschiedlichen Formate können sich in wenigstens einem physikalischen oder chemischen Parameter voneinander unterscheiden und/oder ein unterschiedliches Produkt umfassen.

Somit können auf einer Linie mehrere Formate kombiniert werden. Dabei sind Kombinationen aus unterschiedlichen Produkten, Flaschen, Verschlüssen, Etiketten, Packs bzw. mit unterschiedlicher Zusammenstellung von Paletten denkbar. Beispielsweise können in einem Füller zwei unterschiedliche Getränke abgefüllt werden. Anschließend können die Behälter entsprechend der Befüllung mit einer Kennzeichnung versehen werden. Dabei kann es sich um eine elektronische Kennzeichnung handeln, also eine Zuordnung einer Identifikationsnummer oder einer Identifikationsbezeichnung in einer Steuerungsvorrichtung der Abfüllanlage. Alternativ oder zusätzlich können die Flaschen zwecks Wiedererkennung mit einer Markierung versehen werden, beispielsweise durch Bedrucken mit einer Inkjet-Druckvorrichtung mit beispielsweise einem Strichcode und/oder einem oder mehreren alphanumerischen Schriftzeichen.

Vor und/oder während des Einbringens der Behälter in eine Etikettiermaschine kann die Kennzeichnung mittels eines Sensors/einer Einheit/eines Schieberegisters/UV-Licht oder Ähnlichem erfasst werden und entsprechend der erfassten Kennzeichnung eine entsprechende Etikettierung durchgeführt werden. Dabei kann es sich um ein direktes Etikettendrucken am Aggregat und/oder an der Flasche handeln und/oder um das Auswählen eines entsprechenden Aggregats einer Etikettiervorrichtung.

Die Flaschen können danach vor dem Packer in eine benötigte Gassenanzahl verteilt werden. Hierbei können die Flaschen wieder mittels Erfassen einer Erkennung voneinander unterschieden werden.

Sollten Flaschen während der Produktion aus der Füllanlage entnommen werden, beispielsweise für Qualitätskontrollen, kann ein Ungleichgewicht in der Vorbereitung der Flaschen zum Packer entstehen. Dies kann durch ein Signal an den Füller behoben werden, indem entsprechend mehr Flaschen von der entnommenen Sorte im Füller abgefüllt werden und analog in der Etikettiermaschine etikettiert und/oder in der Blasformmaschine geblasen werden. Dadurch kann ein Ungleichgewicht in der Verpackung vermieden werden. Somit kann in sehr kurzer Zeit auch eine Umstellung auf neue Chargen erreicht werden.

In der Blasformmaschine können unterschiedliche Flaschen, insbesondere je nach Produktsorte, die abgefüllt werden soll, gleichzeitig hergestellt werden. Beispielsweise können vier unterschiedliche Farben für vier unterschiedliche Milchprodukte, vier unterschiedliche Flaschendesigns für vier unterschiedliche Fettstufen oder mehrere unterschiedliche Größen/Volumina/Formen und/oder Flaschengewichte hergestellt werden. Die hergestellten Behälter können beispielsweise im Auslauf der Blasformmaschine mit einer physikalischen Kennzeichnung versehen werden, um im Füller, der Etikettiermaschine und im Packer, basierend auf der Kennzeichnung, behandelt zu werden.

Alternativ oder zusätzlich kann in den Behälterbehandlungsmaschinen der Abfüllanlage entschieden werden, welches Produkt von einem Ventil abzufüllen und/oder zu mischen ist bzw. auf welches Ventil mit einem dem Ventil fest zugeordneten Produkt die Flasche übergeben wird. In der Etikettiermaschine kann, basierend auf der Kennzeichnung, bestimmt werden, welches Etikett verwendet werden soll, wie das Etikett bedruckt wird, zum Beispiel mit welchen Mindesthaltbarkeitsdatum und/oder mit welchem Firmennamen und/oder Motiv, wie die Flasche bedruckt wird oder wo das Etikett auf der Flasche angeordnet wird.

Außerdem kann bestimmt werden, mit welcher Füllmenge und/oder mit wie viel CO₂ der Behälter befüllt wird.

Alternativ oder zusätzlich kann, basierend auf der Kennzeichnung, entschieden werden, wie und wo die Flasche inspiziert wird (Füllhöhe, Sterilität, Etikettensitz und Ähnliches).

Die Kennzeichnung der Behälter kann über ein In-Mold-Labeling-Verfahren durchgeführt werden, insbesondere, indem man den Vorformling gegen ein kennzeichnendes Etikett bläst, oder in die Blasform einen RFID-Chip (radio-frequency identification chip) einbringt, welcher an der Flasche haften bleibt. Auch ein Direktdruck mit einem im UV (Ultraviolett) Licht sichtbaren Farbstoff kann erfolgen. Auch könnte in der Blasform ein verstellbarer, insbesondere automatisch verstellbarer, Strichcode in die Flaschenwandung geblasen werden. Ebenfalls sind solche Kennzeichnungen während und/oder nach dem Formen eines Vorformlings bei einer Spritzgießmaschine denkbar.

Die Abfüllanlage kann auch Pufferspeicher für, insbesondere unterschiedliche, Behälter aufweisen. Ein oder mehrere Pufferspeicher können insbesondere vor einem Packer oder Füller angeordnet sein.

Ein Behälter kann, basierend auf der erfassten Kennzeichnung, wenigstens einer ausgewählten Behälterbehandlungsmaschine zugeführt werden. Dies kann beispielsweise über eine Weiche geschehen. Eine solche Weiche kann beispielsweise ein Servoverteilstern sein, wie er in der DE 10 2006 023 531 beschrieben wird. Alternativ oder zusätzlich sind auch Weichen im Lufttransport oder im Base-Handling denkbar.

Die Kennzeichnung kann, basierend auf einem Auftrag, insbesondere einem Fertigungsauftrag, an die Abfüllanlage durchgeführt werden. Der Auftrag kann wenigstens ein Los (Kombination aus Produkt, Primär- und Sekundärverpackung) spezifizieren. Die Abfüllanlage kann dann automatisch den Fertigungsauftrag auslösen und ausführen. Basierend auf der Kennzeichnung kann die Abfüllanlage automatisch den richtigen Weg in der Bearbeitung von Behältern einschlagen (Routing). Der Fertigungsauftrag kann eine Kombination mehrerer Einzelaufträge sein.

Um ein Behandeln des wenigstens einen Behälters, basierend auf der erfassten Kennzeichnung zu ermöglichen, kann wenigstens eine Behandlungsmaschine unterschiedliche Garniturteile umfassen und/oder kann wenigstens eine Betriebseinstellung wenigstens einer Behälterbehandlungsmaschine entsprechend gewählt werden. Im Folgenden werden unterschiedliche Garniturteile und unterschiedliche Betriebseinstellungen für diverse Behälterbehandlungsmaschinen beschrieben, die verwendet werden können, um Behälter in einem Produktionsdurchlauf basierend auf einer Kennzeichnung variabel behandeln zu können.

Es können unterschiedlich geformte Reckstangen zum Recken von Vorformlingen in einer Blasmaschine vorgesehen sein. Die Formung der Reckstangen kann sich im Durchmesser an der Kontaktspitze, in der Länge und/oder durch Bohrungen, durch die ein Fluid zum Kühlen oder Blasen der Behälter austritt, unterscheiden, insbesondere auch durch die Anordnung der Bohrungen und/oder das Vorhandensein von Bohrungen. Ein Kühlen eines Behälters kann speziell beim Blasen von heiß abzufüllenden Behältern durchgeführt werden.

Unterschiedliche Dornhöhen können bei unterschiedlichen Vorformlingsmundstückshöhen bzw. unterschiedlich gesteuerte Eintauchtiefen der Dornen beim Transport beispielsweise durch eine Heizvorrichtung einer Blasformmaschine vorgesehen sein.

Eine unterschiedliche Abgabe an Mengen an Sterilisationsflüssigkeit und/oder Sterilisationsgas bei der Sterilisation bei unterschiedlich hohen oder unterschiedlich breiten/geformten Behältern/Preforms kann vorgesehen sein. Unterschiedliche Temperaturen der Sterilisationsmedien können gewählt werden. Unterschiedliche Eintauchtiefen/unterschiedlich lange Lanzen können vorgesehen sein.

Eine unterschiedliche Verteilung der Sterilisationsflüssigkeit in der Flasche kann durch unterschiedliche Öffnungen in einer Düse erreicht werden. Dies können Elektronenstrahllanzen (Ebeamfinger) und/oder Düsen für Ozon, gasförmiges oder flüssiges H₂O₂ (Wasserstoffperoxid), Peressigsäure oder Düsen zum Rinsen mit Sterilwasser nach der Sterilisation sein. Zusätzlich oder alternativ können unterschiedliche Behandlungsprogramme bei der Sterilisation für unterschiedliche Behältertypen gefahren werden.

Beim Sterilisieren können insbesondere unterschiedlich lange Behandlungszeiten für unterschiedliche Behältertypen vorgesehen sein. Beispielsweise können kleine Behälter nur für 25° einer Drehung eines umlaufenden Sterilisationsmoduls sterilisiert werden, während größere Flaschen über 100° oder zeitabhängig sterilisiert werden. Dies kann ebenfalls basierend auf einem Signals von einer Erfassungseinrichtung zum Erfassen einer Kennzeichnung erfolgen. Somit kann einiges an Sterilisationsflüssigkeit oder -gas bei den kleineren Behältern eingespart werden.

Unterschiedlich betriebene Heiztaschen können in der Heizvorrichtung einer Blasformmaschine vorgesehen sein. Beispielsweise können Infrarotstrahlen zugeschaltet werden, deren Leistung variabel gesteuert werden kann.

Etikettenspender können mit variabler Schnittlänge vorgesehen sein. Eine Etikettenrolle kann in einem Strang zwei unterschiedlich lange Etiketten umfassen. Alternativ oder zusätzlich kann ein Direktdruck auf Etiketten oder auf den Behälter stattfinden. Analog dazu kann auch ein Druck auf Verpackungsmaterial für Gebinde, wie etwa Six-Packs, Kästen, Paletten, durchgeführt werden. In diesem Fall kann beispielsweise auf einen Karton und/oder eine Folie gedruckt werden. Ein Direktdruck kann auch zur Kennzeichnung eines Behälters, insbesondere eines Vorformlings, verwendet werden.

Gleiche oder unterschiedliche Behälter können jeweils in gleiche oder unterschiedliche Verpackungen variabel in einem oder in mehreren Packern, insbesondere gleichzeitig, verpackt werden.

Unterschiedlich gestaltete (Kontakt-)Klammern können in einer Heizvorrichtung einer Blasformmaschine vorgesehen werden. Dadurch kann ein sogenanntes "Preferential-Heating" erreicht werden, also eine Herstellung von in Umfangsrichtung nicht rotationssymmetrischen Flaschen mit konstanter Wanddicke. Hier können nach dem Aufheizen der Vorformlinge Klammern eingesetzt werden, die die Vorformlinge kurz vor dem Blasen an bestimmten Stellen der Außenwandung berühren, um diese folglich an gezielten Bereichen abkühlen bzw. zu temperieren.

Wenn verschiedene Flaschen behandelt werden, können hierfür unterschiedliche Garniturteile vorgesehen sein. Beispielsweise können zwei Arten von Garnituren vorgesehen sein, wobei eine rotationssymmetrisch ist und die andere nicht. In diesem Fall kann auch nur jede zweite Flasche behandelt werden. Jede zweite Flasche kann in diesem Fall nicht behandelt werden und beispielsweise am Preferential-Heating-Stern vorbeigefahren werden. Dadurch ist es möglich, beispielsweise Rechteckflaschen und runde Flaschen hintereinander aus einer Blasformmaschine auszubringen.

Behälter können nach der Blasmaschine unterschiedlich lang einer Bodennachkühlung ausgesetzt werden. Ein Flaschenboden kann direkt nach dem Formblasen noch viel Wärme enthalten, insbesondere wenn er eine hohe Wandstärke hat. Daher kann es erforderlich sein, den Boden zusätzlich zu kühlen, insbesondere wenn die Blasmaschine nahe der Füllvorrichtung angeordnet ist. Hier sind unter anderem Düsen möglich, die von außen gegen den Boden kaltes Wasser und/oder kalte Luft sprühen, wobei die Düsen stationär oder mitlaufend sein können. Bei Flaschen, die keine Kühlung benötigen, kann in diesem Fall die Zuführung von Wasser und/oder Luft reduziert oder abgeschaltet werden.

In einer Sterilisationsvorrichtung könnten unterschiedliche Sterilisationswirkstoffe oder Sterilisationsmedien entweder in der gleichen oder in separaten Sterilisationsmaschinen verwendet werden (beispielsweise H₂O₂ (flüssig oder gasförmig), Peressigsäure, Lauge, Heißwasser, Dampf, UV-Licht, Ozonbegasung, Elektronenstrahlen und/oder γ-Bestrahlung (GammaBestrahlung)).

In einer Füllvorrichtung können unterschiedliche Volumina und/oder Füllgüter, insbesondere je nach Ventil separat, abgefüllt werden.

Auch in einer Blasformmaschine können unterschiedliche Betriebseinstellungen gewählt werden. Beispielsweise sind Betriebseinstellungen mit der Bezeichnung "Standard", "Relax" und "Heatset" bekannt. Bei "Standard" werden die Blasformen kalt (4 bis 20 °C) temperiert, um das warme PET-Material nach dem Aufblasen abzuschrecken und damit die Molekülketten zu verspannen. Dadurch kann eine hohe Festigkeit erreicht werden. Bei Heißabfüllung kann dabei die Flasche aber extrem verformt werden. Deswegen werden bei Heißabfüllungen die Blasformen erhitzt (110 bis 140 °C, so dass sich das PET an der Blasformwand "entspannt"). Hier sind aber die Flaschen dann meisten bei gleicher Wanddicke nicht so stabil.

Im "Heatset"-Prozess wird die Flasche nach der Anlage an der heißen Form durch eine hohle Reckstange gespült, insbesondere mit Druckluft durchgeblasen, um die Wärme heraus zu bekommen. Im "Relax-Prozess" werden die Formen auf 60 bis 80 °C aufgewärmt.

Sollten wenigstens zwei Behälter mit unterschiedlicher Kennzeichnung unterschiedlich behandelt werden, könnte beispielsweise jede zweite Blasstation heißgefahren (Heatset) und die anderen kaltgefahren (Standard) werden. Dadurch könnte Heißabfüllung für jede zweite Flasche und Kaltabfüllung für die anderen erreicht werden. Die Abfüllung könnte auf zwei unterschiedlichen Füllern durchgeführt werden oder in einer Füllvorrichtung, wobei unterschiedliche Füllventile entweder mit heißem oder kaltem Produkt versorgt werden. Durch das Rückschrumpfen bei der Heißabfüllung könnte die Flasche durch den entstehenden Unterdruck verformt werden (heißes Produkt erkaltet später und Dichte nimmt ab). Daher kann flüssiger Stickstoff vor dem Verschließen der Flasche in das Produkt eingebracht werden, welcher diesen Unterdruck ausgleicht. In diesem Fall könnte eine Stickstoffdüse für die Füllventile vorgesehen werden, wobei ein Sensor die Temperatur des Produkts in der Flasche erkennt und basierend auf dieser erkannten Temperatur Stickstoff einbringt oder nicht. Alternativ oder zusätzlich kann basierend auf der erfassten Kennzeichnung entschieden werden, ob Stickstoff in die Flasche eingebracht wird oder nicht. Die Stickstoffeinspritzung kann auch in einem separaten Stern vor und/oder nach dem Füllen erfolgen.

Unterschiedliche Transportwege bei einem Lufttransport sind denkbar, insbesondere bei unterschiedlichen Neckdurchmessern.

Für eine Blasformmaschine sind beispielsweise folgende Verfahrensparameter zu Betriebseinstellungen wählbar: Abstände von Heizstrahlern untereinander, eine Oberflächenkühlung eines Vorformlings in der Heizvorrichtung, eine Mündungskühlung des Vorformlings in einer Heizvorrichtung und/oder die Temperatur der Blasformen. Auch eine verwendete Strahlungswellenlänge kann verändert werden, beispielsweise durch einen wahlweisen Einsatz von optischen Filtern.

Folgende Verfahrensparameter können in einer Füllvorrichtung als Betriebseinstellung gewählt werden: Abfülltemperatur des Produkts, CO₂-Dosierung, Druckbeaufschlagung (oder Vakuum) der Flasche vor, während und/oder nach dem Füllen, Sterilisation, Produkt selbst und/oder Stickstoffbeaufschlagung.

Folgende Verfahrensparameter sind als Betriebseinstellungen in einer Etikettiermaschine beispielsweise wählbar: Geschwindigkeitsregulierung des Servoantriebs (Anpassung an neue, zu drehende Winkel), Wechseldorn beim Sleeve, richtige Einrichtungen vorhanden/zugeschaltet, richtige Etiketten eingelegt.

Die Kennzeichnung kann auch verwendet werden, um auftretende Probleme in der Behälterbehandlungsanlage zu diagnostizieren. Beispielsweise können durch die Kennzeichnung Relationen zwischen Fehlern und/oder Problemen in der Behälterbehandlungsanlage mit dem zu erzeugenden Los festgestellt werden. Insbesondere im Fall mikrobiologischer Fehler kann die Verfolgbarkeit nach Stationen und Parametern von großem Interesse bei der Ursachensuche sein.

Folgende unterschiedliche Garniturteile sind für die Behälterbehandlungsmaschinen denkbar:
Blasmaschinengarnituren:
   - Reckstangen mit unterschiedlichem Durchmesser oder Länge, mit unterschiedlicher Spitze, beispielsweise einmal normal rund, und die Reckstangen für die zweite Garnitur in Petaloidform, um bestimmte Bereiche des Vorformlings mehr an den Kontaktpunkten abzukühlen. Zweiteres wird zum Beispiel beim Nitro-hotfill (Siehe oben: Stickstoffbeaufschlagung) benötigt;
   - Lanzen bei Preformrinsern (Linear- oder Rundlaufrinser) und Transporthalter hierfür, die die Vorformlinge mit vorzugsweise ionisierter Druckluft ausblasen, hier kann die Länge, der Winkel oder der Durchmesser variieren;
   - Zuführschienen oder Sortiereinrichtungen, insbesondere Rollensortierer mit unterschiedlichen Geometrien oder Abständen;
   - Abstand von Aufnahmen von einem Vertikalförderer für Preforms;
   - Heizdorne mit unterschiedlichem Durchmesser, Höhe, Hub, aktivem oder passiven Greife, oder Ausrichtung;
   - Transportklammern mit unterschiedlichem Aufnahmedurchmesser oder Ausrichtung;
   - Abschirmplatten mit unterschiedlichem Durchmesser, der je nach Mündungsbereich der Vorformlinge variieren kann;
   - Einlaufstern (Sägezahnstern) zum Transportieren von Preforms innerhalb der Heizvorrichtung einer Blasformmaschine;
   - Blasformen, Böden; Blasdüsen innerhalb einer Blasstation;
   - Zwei verschiedene Reckkurven, Bodenkurven, oder Formträgeransteuerkurven für die Öffnungsbewegung;
   - Reckanschläge;
   - Flaschenorientierung nach Auslaufstern (und Halter hierfür). Bei der Produktion von Rechteckflaschen können diese ausgerichtet werden. Wenn gleichzeitig runde Flaschen produziert werden, müssen diese nicht unbedingt ausgerichtet werden. Auch zwei verschiedene Ausrichtungen sind denkbar; und/oder
   - Anschlüsse (Hotfill: hitzebeständige Leitungen für Öl, gekühlte Form: Standardleitungen) und Material für die Blasformen (Hotfill: beispielsweise Stahl, gekühlte Form: beispielsweise Alu).
Füllmodul:
   - Zwei Einteilsterne oder -schnecken für unterschiedliche Flaschendurchmesser oder Neckdurchmesser;
   - Zwei verschiedene Neckhandlingklammern, Neckhandlingklammersterne (bei Wechsel von mehreren Klammern auf einmal, die auf einem Stern montiert sind, Taschenneckhandlingsterne (mit im Durchmesser unterschiedlichen Ausbuchtungen);
   - darunter auch Behälterführungen (insbesondere Schienen);
   - Behälterführungen im Basehandling (abhängig vom Flaschendurchmesser), hierfür - Außenführungen und Sterne selbst;
   - Sensoren oder Sensorpositionen für Flasche, Behältererkennung, Füllstandskontrolle, Temperatur, Feuchtigkeit auf Flasche;
   - Flaschenduschen und/oder Gewindeabspritzungen um Produktreste nach dem Füllen und/oder nach dem Verschließen zu entfernen;
   - Rinser-, Verschließer- oder Füllerklammern oder -aufnahmen (Handling, Neckdurchmesser);
   - Absenkstern (Flaschenhöhe- und Durchmesser);
   - Schutzkammerbleche im Füller;
   - Klammerstern, der die Flaschen am Körper greift (auch durchmesserabhängig);
   - Zwei verschiedene Füllventile, Bodenstücke, Zentrierglocken, Distanzstücke, Rückluft- und Füllrohre, verschiedene Sensoren zur Füllmengen- oder Füllhöhenbestimmung (Durchfluss-, Wägezelle, elektrische Sonden);
   - Dosierkammern (ein Ventil ohne, eines mit);
   - Zwei unterschiedliche Verschließer;
   - Verschließkonen und -köpfe und -rinnen;
   - Vorrichtung zum Einteilen der Verschlüsse (Pick & Place - Scheibe oder -station);
   - Abschleppschuh, Verschlussübergabe;
   - Unterschiedliche Verschließwerkzeuge (für Schraubverschlüsse, Kronkorken, Sektkorken oder Korkschloss oder Aufprellverschließelement, Anrollverschließköpfe, Siegelfolien);
   - Nach dem Absenkstern zwei unterschiedliche Auslauftransportbänder;
   - CIP (Cleaning in Place)-Kappen (unterschiedliche Durchmesser oder Höhen, je nach Füllventil);
Etikettiermodul:
   - Auslaufzunge;
   - Führungsbogen Maschine Einlauf; Führungsbogen Maschine Auslauf;
   - Einlaufstern; Zunge für Einlaufstern;
   - Sperrstern;
   - Einteilschnecken;
   - Einlaufführung außen und innen;
   - Transferschnecken;
   - Bremsrolle für Staniolierung;
   - Greifer und Aufnahmen: Fußgreifer; Kippgreifer; Zentrierglocke; Etikettengreifer; Flaschengreifer (Neckhandlinggreifer, Fußteller); Greiferzylinder; Aufnahmedorne; Verschiebegreifer;
   - Etikettenspender und Schieber hierfür;
   - Beleimungswalzen; Leim (Heißleim, Kaltleim);
   - Steuerstreifenführungen;
   - Leimschaber;
   - Etikettenabstreifer;
   - Leimsegmentständer;
   - Etikettenanbürstung (Durchmesser, Höhe, Härte);
   - Anrollung;
   - Fächer (für eine exakte Führung der Flasche im Einlauf/Auslauf des Etikettiermoduls);
   - Schwammrolle am Transportband (zum Andrücken des Etiketts, Abstands und Durchmesservariation, abhängig vom Flaschendurchmesser);
   - Tischkurvensegment (Kurvensegment zur Steuerung der Flaschendrehung, vs. Servo);
Verpackungsmodul:
   - Einteilerleisten;
   - Spreizkeile bei Zweibahnigkeit;
   - Schubstangen bei anderer Maschinenteilung;
   - Einschlagstäbe;
   - mehr- oder ganzlagige Pack- und Palettier-Greiferköpfe verschiedenster Art;
   - reihenweise Pack- und Palettier-Greiferköpfe verschiedenster Art;
   - Trennbleche für Klemmgreifer;
   - Leitbleche für Flaschentisch;
   - Abdeckhauben für Staubschutz;
   - Einführrahmen für Einpacken von Behälter;
   - unterschiedliche Palletten.

### Prüf- oder Inspektionseinrichtungen

- Führungsschienen;
- Flaschengreifer.

### Pasteur zur Pasteurisierung von Produkten

- Greifer und Transporteure aller Art

Allgemein ist es auch möglich auf einer Behandlungsmaschine die zugehörigen Garnituren abschnittsweise oder wechselweise anzuordnen. Dabei sind nicht nur zwei Garniturensätze pro Behandlungsmaschine möglich sondern auch drei, vier, fünf oder mehr.

Die Behandlungsmaschinen können dabei insbesondere als Rundläufermaschinen ausgebildet sein und die unterschiedlichen Garnituren oder Behandlungsweisen (Betriebseinstellungen, siehe oben) am Umfang wechselnd und in gleichmäßigem Abstand verteilt aufweisen. Insbesondere kann eine Behandlungsmaschine nur aus unterschiedlichen Garnituren für jede Behandlungseinheit bestehen. In anderen Worten würde dann keine Garnitur doppelt auf einer Behandlungsmaschine vorhanden sein.

Es kann auch eine Behandlung je nach basierend auf der Kennzeichnung erkanntem Behältnis ausgelassen, insbesondere mit einer Weiche bzw. einem Verteilstern umfahren werden.

## Patentansprüche

1. Verfahren zum Behandeln wenigstens eines Behälters in einer Behälterbehandlungsanlage, umfassend die Schritte:
Empfangen eines Auftrages und Kennzeichnen wenigstens eines Behälters mit einer Kennzeichnung basierend auf dem empfangenen Auftrag;
Erfassen der Kennzeichnung des wenigstens einen Behälters;
Auswählen einer von mehreren Etikettiervorrichtungen (46, 47) der Behälterbehandlungsanlage oder eines von mehreren Etikettieraggregaten (34; 35; 36) einer Etikettiervorrichtung (31) der Behälterbehandlungsanlage basierend auf der erfassten Kennzeichnung; und
Etikettieren des wenigstens einen Behälters basierend auf der Auswahl der Etikettiervorrichtung oder des Etikettieraggregats (34; 35; 36);
wobei die Kennzeichnung eine elektronische und/oder eine physikalische und/oder eine chemische Kennzeichnung ist; und
wobei eine physikalische und/oder chemische Kennzeichnung des wenigstens einen Behälters ein Aufbringen einer Markierung auf einer Oberfläche des Behälters und/oder in einer Behälterwand umfasst.

2. Verfahren nach Anspruch 1, wobei eine elektronische Kennzeichnung des wenigstens einen Behälters eine Zuordnung einer Identifikationsnummer und/oder einer Identifikationsbezeichnung zum wenigstens einen Behälter, insbesondere mittels einer Steuerungsvorrichtung der Behälterbehandlungsanlage, umfasst.

3. Verfahren nach Anspruch 1, wobei die Markierung auf den wenigstens einen Behälter aufgedruckt und/oder mittels Laserbeschriftung aufgebracht wird.

4. Verfahren nach Anspruch 1, wobei die Markierung ein Element umfasst, welches auf den wenigstens eine Behälter aufgebracht wird, beispielsweise in einem In-Mold-Labeling-Verfahren, insbesondere wobei die Markierung ein Etikett und/oder einen RFID-Chip umfasst.

5. Verfahren nach einem der vorangegangenen Ansprüche, wobei das Erfassen der Kennzeichnung mittels eines Sensors und/oder einer Steuerungsvorrichtung durchgeführt wird.

6. Verfahren nach einem der vorangegangenen Ansprüche, wobei wenigstens zwei Behälter mit einer unterschiedlichen Kennzeichnung gekennzeichnet werden, wobei die wenigstens zwei Behälter in der Behälterbehandlungsanlage mittels der unterschiedlichen Kennzeichnung voneinander unterschieden werden und wobei die wenigstens zwei Behälter aufgrund der Unterscheidung in einer oder mehreren Behälterbehandlungsmaschinen der Behälterbehandlungsanlage unterschiedlich behandelt werden und/oder unterschiedlichen Behälterbehandlungsmaschinen zugeführt werden.

7. Verfahren nach Anspruch 6, wobei die wenigstens zwei Behälter innerhalb eines Produktionsdurchlaufs aus der Behälterbehandlungsanlage ausgebracht werden.

8. Verfahren nach einem der vorangegangenen Ansprüche, umfassend Auswählen mehrerer Behälterbehandlungsmaschinen der Behälterbehandlungsanlage basierend auf der erfassten Kennzeichnung, wobei die Behälterbehandlungsmaschinen der Behälterbehandlungsanlage eine Blasformmaschine (26), eine Spritzgussvorrichtung (25) zum Spritzgießen von Behältern, insbesondere von Vorformlingen, eine Füllvorrichtung (29), einen Rinser (28), einen Sterilisator (27), einen Verschließer (30), eine Beschichtungseinrichtung, eine Behälterausrichtevorrichtung, ein Direktdruckaggregat für Etiketten und/oder Behälter, ein Transporteur, eine Kommissioniervorrichtung (33) und/oder einen Packer (32) umfassen.

9. Verfahren nach einem der vorangegangenen Ansprüche, wobei die Behälterbehandlungsanlage außerdem eine Blasformmaschine (26) umfasst und wobei eine Heizvorrichtung (12) der Blasformmaschine, insbesondere eine Mikrowellenheizvorrichtung, derart ausgebildet und/oder konfiguriert ist, dass wenigstens zwei Behälter mit unterschiedlicher Kennzeichnung auf unterschiedliche Temperaturen und/oder Temperaturprofile erwärmt werden.

10. Verfahren nach Anspruch 8 oder 9, wobei wenigstens zwei Behälter mit unterschiedlicher Kennzeichnung durch elektrisches Recken in einer Blasformmaschine unterschiedlich gereckt werden.

11. Verfahren nach einem der vorangegangenen Ansprüche, wobei wenigstens eine Betriebseinstellung wenigstens einer Behälterbehandlungsmaschine (1, 2, 3, 4, 5, 6) der Behälterbehandlungsanlage basierend auf der erfassten Kennzeichnung ausgewählt wird; und
wobei der wenigstens eine Behälters basierend auf der Auswahl der wenigstens einen Betriebseinstellung behandelt wird.

12. Behälterbehandlungsanlage zum Behandeln wenigstens eines Behälters, umfassend:
eine Kennzeichnungsvorrichtung zum Kennzeichnen wenigstens eines Behälters mit einer Kennzeichnung;
eine Vorrichtung (7) zum Erfassen der Kennzeichnung des wenigstens einen Behälters; und
mehrere Etikettiervorrichtungen (46, 47) oder eine Etikettiervorrichtung (31) mit mehreren Etikettieraggregaten (34; 35; 36);
wobei die Behälterbehandlungsanlage derart ausgebildet und/oder konfiguriert ist, dass eine der Etikettiervorrichtungen (46, 47) oder ein der Etikettieraggregate (34; 35; 36) der Etikettiervorrichtung (31) basierend auf der Kennzeichnung des wenigstens einen Behälters zum Etikettieren des wenigstens einen Behälters ausgewählt wird; und
wobei die Behälterbehandlungsanlage derart ausgebildet und/oder konfiguriert ist, dass das Kennzeichnen des wenigstens einen Behälters basierend auf einem empfangenen Auftrag durchgeführt wird.

13. Behälterbehandlungsanlage nach Anspruch 12, wobei die Behälterbehandlungsanlage außerdem eine Blasformmaschine, eine Füllvorrichtung und/oder einen Packer umfasst, insbesondere wobei die Behälterbehandlungsanlage eine Blasformmaschine umfasst und wobei die Blasformmaschine eine Mikrowellenheizvorrichtung und/oder eine elektrische Reckvorrichtung umfasst.

## Claims

1. Method for processing at least one container in a container processing plant, comprising the steps of:
receiving an order, and
marking at least one container with a marking on the basis of the received order;
detecting the marking of the at least one container;
selecting a labelling device (46, 47) from a plurality of labelling devices of the container processing plant or a labelling unit (34; 35; 36) from a plurality of labelling units of a labelling device (31) of the container processing plant on the basis of the detected marking; and
labelling the at least one container on the basis of the selection of labelling device or labelling unit (34; 35; 36);
wherein the marking is an electronic marking and/or a physical marking and/or a chemical marking; and
wherein a physical marking and/or chemical marking of the at least one container comprises applying a marker on a surface of the container and/or in a container wall.

2. Method according to claim 1, wherein an electronic marking of the at least one container comprises allocating an identification number and/or an identification name to the at least one container, in particular by means of a control device of the container processing plant.

3. Method according to claim 1, wherein the marker is printed onto the at least one container and/or applied by laser inscription.

4. Method according to claim 1, wherein the marker comprises an element which is applied to the at least one container, for example in an in-mould labelling method, in particular wherein the marker is a label and/or an RFID chip.

5. Method according to any of the preceding claims, wherein the marking is detected by means of a sensor and/or a control device.

6. Method according to any of the preceding claims, wherein at least two containers are marked with different markings, wherein the at least two containers are distinguished in the container processing plant by means of the different markings, and wherein the at least two containers are processed differently in one or more container processing machines of the container processing plant and/or are supplied to different container processing machines on the basis of the distinction.

7. Method according to claim 6, wherein the at least two containers are output from the container processing plant within one production cycle.

8. Method according to any of the preceding claims, comprising selecting a plurality of container processing machines of the container processing plant on the basis of the detected marking, wherein the container processing machines of the container processing plant comprise a blow moulding machine (26), an injection moulding device (25) for injection-moulding containers, in particular for injection-moulding preforms, a filling device (29), a rinser (28), a steriliser (27), a closer (30), a coating apparatus, a container orientation device, a direct-printing unit for labels and/or containers, a conveyor, a picking device (33) and/or a packer (32).

9. Method according to any of the preceding claims, wherein the container processing plant also comprises a blow moulding machine (26), and wherein a heating device (12) of the blow moulding machine, in particular a microwave heating device, is designed and/or configured such that at least two containers having different markings are heated to different temperatures and/or different temperature profiles.

10. Method according to either claim 8 or claim 9, wherein at least two containers having different markings are differently stretched in a blow moulding machine by electric stretching.

11. Method according to any of the preceding claims, wherein at least one operation setting of at least one container processing machine (1, 2, 3, 4, 5, 6) of the container processing plant is selected on the basis of the detected marking; and
wherein the at least one container is processed on the basis of the selection of the at least one operation setting.

12. Container processing plant for processing at least one container, comprising:
a marking device for marking at least one container with a marking;
a device (7) for detecting the marking of the at least one container; and
a plurality of labelling devices (46, 47) or one labelling device (31) having a plurality of labelling units (34; 35; 36),
wherein the container processing plant is designed and/or configured such that one of the labelling devices (46, 47) or one of the labelling units (34; 35; 36) of the labelling device (31) is selected on the basis of the marking of the at least one container in order to label the at least one container; and
wherein the container processing plant is designed and/or configured such that the at least one container is marked on the basis of the received order.

13. Container processing plant according to claim 12, wherein the container processing plant also comprises a blow moulding machine, a filling device and/or a packer, in particular wherein the container processing plant comprises a blow moulding machine and wherein the blow moulding machine comprises a microwave heating device and/or an electric stretching device.

## Revendications

1. Procédé de traitement d'au moins un contenant dans une installation de traitement de contenants, comprenant les étapes suivantes :
réception d'un contrat de commande et caractérisation d'au moins un contenant avec une caractéristique basée sur le contrat de commande reçu ;
relevé de la caractéristique dudit au moins un contenant ;
sélection d'un de plusieurs dispositifs d'étiquetage (46, 47) de l'installation de traitement de contenants ou d'un de plusieurs groupes d'étiquetage (34; 35; 36) d'un dispositif d'étiquetage (31) de l'installation de traitement de contenants, en se basant sur la caractéristique relevée ; et
étiquetage dudit au moins un contenant en se basant sur la sélection du dispositif d'étiquetage ou du groupe d'étiquetage (34; 35; 36) ;
procédé
d'après lequel la caractéristique est une caractéristique électronique et/ou physique et/ou chimique ; et
d'après lequel une caractéristique physique et/ou chimique dudit au moins un contenant comprend l'application d'une marque sur une surface du contenant et/ou dans une paroi de contenant.

2. Procédé selon la revendication 1, d'après lequel une caractéristique électronique dudit au moins un contenant comprend une association d'un numéro d'identification et/ou d'une désignation d'identification au dit au moins un contenant, notamment au moyen d'un dispositif de commande de l'installation de traitement de contenants.

3. Procédé selon la revendication 1, d'après lequel la marque est imprimée sur ledit au moins un contenant, et/ou est appliquée par inscription laser.

4. Procédé selon la revendication 1, d'après lequel la marque comprend un élément qui est appliqué sur ledit au moins un contenant, par exemple lors d'un procédé dit In-Mold-labeling, notamment d'après lequel la marque comprend une étiquette et/ou une puce RFID.

5. Procédé selon l'une des revendications précédentes, d'après lequel le relevé de la caractéristique est effectué au moyen d'un capteur et/ou d'un dispositif de commande.

6. Procédé selon l'une des revendications précédentes, d'après lequel au moins deux contenants sont **caractérisés par** une caractéristique différente, d'après lequel on distingue lesdits au moins deux contenants dans l'installation de traitement de contenants au moyen de leur caractéristique différente, et d'après lequel lesdits au moins deux contenants, en raison de leur distinction réciproque, sont traités différemment dans une ou plusieurs machines de traitement de contenants de l'installation de traitement de contenants, et/ou sont transmis à des machines de traitement de contenants différentes.

7. Procédé selon la revendication 6, d'après lequel lesdits au moins deux contenants sont, au cours d'un passage de production, extraits hors de l'installation de traitement de contenants.

8. Procédé selon l'une des revendications précédentes, comprenant la sélection de plusieurs machines de traitement de contenants de l'installation de traitement de contenants en se basant sur la caractéristique relevée, procédé d'après lequel les machines de traitement de contenants de l'installation de traitement de contenants comprennent une machine de formage par soufflage (26), un dispositif de moulage par injection (25) pour mouler des contenants par injection, notamment des préformes, un dispositif de remplissage (29), un rinceur (28), un stérilisateur (27), un dispositif de fermeture (30), un dispositif d'alimentation, un dispositif d'orientation des contenants, un groupe d'impression directe pour étiquettes et/ou contenants, un transporteur, un dispositif de préparation de commandes (33) et/ou un emballeur (32).

9. Procédé selon l'une des revendications précédentes, d'après lequel l'installation de traitement de contenants comprend en outre une machine de formage par soufflage (26), et d'après lequel un dispositif de chauffage (12) de la machine de formage par soufflage, notamment un dispositif de chauffage par microondes, est réalisé et/ou configuré de manière à ce qu'au moins deux contenants avec une caractéristique différente soient échauffés à des températures différentes et/ou des profils de température différents.

10. Procédé selon la revendication 8 ou la revendication 9, d'après lequel au moins deux contenants avec une caractéristique différente sont étirés de manière différente, par étirage électrique dans une machine de formage par soufflage.

11. Procédé selon l'une des revendications précédentes, d'après lequel on sélectionne au moins un réglage de fonctionnement d'au moins une machine de traitement de contenants (1, 2, 3, 4, 5, 6) de l'installation de traitement de contenants, en se basant sur la caractéristique relevée ; et d'après lequel ledit au moins un contenant est traité en se basant sur la sélection dudit au moins un réglage de fonctionnement.

12. Installation de traitement de contenants pour traiter au moins un contenant, comprenant :
un dispositif de caractérisation pour caractériser au moins un contenant avec une caractéristique ;
un dispositif (7) pour relever la caractéristique dudit au moins un contenant ; et
plusieurs dispositifs d'étiquetage (46, 47) ou un dispositif d'étiquetage (31) avec plusieurs groupes d'étiquetage (34; 35; 36) ;
l'installation de traitement de contenants étant réalisée et/ou configurée de façon à sélectionner l'un des dispositifs d'étiquetage (46, 47) ou un des groupes d'étiquetage (34; 35; 36) du dispositif d'étiquetage (31), en se basant sur la caractéristique dudit au moins un contenant, pour assurer l'étiquetage dudit au moins un contenant ; et
l'installation de traitement de contenants étant réalisée et/ou configurée de manière à ce que la caractérisation dudit au moins un contenant soit effectuée en se basant sur un contrat de commande reçu.

13. Installation de traitement de contenants selon la revendication 12, d'après laquelle l'installation de traitement de contenants comprend, en outre, une machine de formage par soufflage, un dispositif de remplissage et/ou un emballeur, notamment d'après laquelle l'installation de traitement de contenants comprend une machine de formage par soufflage et d'après laquelle la machine de formage par soufflage comprend un dispositif de chauffage par microondes et/ou un dispositif d'étirage électrique.
